(19) Europäisches Patentamt
European Patent Office
Office européen des brevets

(11) **EP 4 592 872 A1**

(12) **EUROPEAN PATENT APPLICATION**
published in accordance with Art. 153(4) EPC

(43) Date of publication:
**30.07.2025 Bulletin 2025/31**

(21) Application number: **23870480.3**

(22) Date of filing: **19.09.2023**

(51) International Patent Classification (IPC):
**G06F 18/214** (2023.01)

(52) Cooperative Patent Classification (CPC):
**G06F 18/214**

(86) International application number:
**PCT/CN2023/119695**

(87) International publication number:
**WO 2024/067248 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 CN 202211214685**
**12.10.2022 CN 202211247927**

(71) Applicant: **Huawei Technologies Co., Ltd.**
**Shenzhen, Guangdong 518129 (CN)**

(72) Inventors:
• **LIU, Lifu**
**Shenzhen, Guangdong 518129 (CN)**
• **SUN, Yan**
**Shenzhen, Guangdong 518129 (CN)**
• **CHEN, Hongzhi**
**Shenzhen, Guangdong 518129 (CN)**
• **PANG, Jiyong**
**Shenzhen, Guangdong 518129 (CN)**
• **LI, Yuan**
**Shenzhen, Guangdong 518129 (CN)**
• **ZOU, Feifei**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND APPARATUS FOR ACQUIRING TRAINING DATA SET**

(57)    This application provides a training dataset obtaining method and an apparatus. A training device may request a network to send a training dataset, and request information also indicates related information of a first training dataset that is sent by a network device to the training device and that is needed by the training device. In other words, in this application, the training device may indicate a needed training dataset to the network device, and the network device may send, to the training device, a training dataset indicated by the training device, and does not need to continuously deliver training datasets. The method can reduce a waste of air interface resources and air interface overheads, and improve use performance of the air interface resources.

Method 500

First network device

Training device

Step 501: The training device determines to monitor performance of an AI model

Step 502: The first network device sends a training dataset to the training device

Step 503: The training device sends first information to the first network device, where the first information indicates related information of a first training dataset that the training device requests the first network device to send

Step 504: The first network device sends the first training dataset to the training device based on the related information indicated by the first information

Step 505: The training device trains the AI model based on the first training dataset

Step 506: The training device sends model training completion indication information to the first network device

FIG. 5

EP 4 592 872 A1

**Description**

This application claims priorities to Chinese Patent Application No. 202211214685.0, filed with the China National Intellectual Property Administration on September 30, 2022 and entitled "TRAINING DATASET OBTAINING METHOD AND APPARATUS", and to Chinese Patent Application No. 202211247927.6, filed with the China National Intellectual Property Administration on October 12, 2022 and entitled "TRAINING DATASET OBTAINING METHOD AND APPARATUS", both of which are incorporated herein by reference in their entireties.

**TECHNICAL FIELD**

Embodiments of this application relate to the communication field, and more specifically, to a training dataset obtaining method and an apparatus.

**BACKGROUND**

Currently, an artificial intelligence (artificial intelligence, AI) model may be deployed on a training device (for example, a terminal device) for training and updating. When the training device trains the AI model, to support the training device in training the AI model, a network device continuously (for example, periodically) transmits training datasets to the training device, and the network device stops sending a training dataset to the training device only after the training device sends model training completion indication information to the network device. However, in a process in which the training device trains the AI model, the training datasets transmitted by the network device to the training device are not needed by the training device, causing a waste of resources. Therefore, how to obtain a training dataset when the training device trains the AI model becomes a technical problem that needs to be resolved.

**SUMMARY**

Embodiments of this application provide a training dataset obtaining method, to reduce a waste of air interface resources and air interface overheads, and improve use performance of the air interface resources.

According to a first aspect, a training dataset obtaining method is provided. The method may be performed by a training device, or may be performed by a component (for example, a chip or circuit) of a training device. This is not limited. For example, the training device may be a terminal device.

The method includes: sending first information to a network device, where the first information indicates related information of a first training dataset that the training device requests the network device to send; and receiving the first training dataset from the network device, where the first training dataset is a training dataset based on the related information indicated by the first information, and the first training dataset is used for training an artificial intelligence AI model.

Based on the foregoing technical solution, in this application, the training device may request a network to send a training dataset, and request information also indicates related information of the first training dataset that is sent by the network device to the training device and that is needed by the training device. In other words, in this application, the training device may indicate a needed training dataset to the network device, and the network device may send, to the training device, a training dataset indicated by the training device, and does not need to continuously deliver training datasets. The method can reduce a waste of air interface resources and air interface overheads, and improve use performance of the air interface resources.

In a possible implementation, the related information includes at least one of the following: information about a size of the first training dataset, configuration information of an input of the AI model, or configuration information of a reference signal used for training the AI model.

Based on the foregoing technical solution, in this application, the first information may indicate the information about the size of the first training dataset, the configuration information of the input of the AI model, or the configuration information of the reference signal used for training of the AI model. In this way, the size of the first training dataset needed by the training device can be explicitly or implicitly indicated, so that the network device can deliver the first training dataset based on an indication of the training device, to improve utilization of the air interface resources.

In a possible implementation, the information about the size of the first training dataset is determined by the training device based on a size of a training dataset needed for completing training of the AI model.

For example, the training device may determine, by using historical information, a total quantity of training datasets required when the AI model is trained from an initial state of the AI model (for example, the initial state of the AI model is 0) to a converged state. For example, the training device determines, based on historical experience, that the full codebook needs to be swept for totally 60,000 times to obtain training datasets for training the AI model.

Based on the foregoing technical solution, in this application, the training device may determine, based on the historical experience, the quantity of training datasets required for training the AI model, and indicate the quantity to the network device, so that the network device delivers the training datasets based on the indication, to reduce a waste of the air interface resources.

In a possible implementation, before the sending first information to a network device, the method further includes: determining first performance of the AI model; and determining the information about the size of the first training dataset based on the first performance of the AI model and second performance of the AI model, where the first performance is current performance of the AI model, and the second performance is target performance of the AI model.

For example, when monitoring the AI model, the training device compares the current performance of the AI model obtained through monitoring with model performance that is in the historical information and that corresponds to the AI model in the converged state, and may estimate, based on the current performance of the AI model, the size of the first training dataset required for achieving expected model performance.

Based on the foregoing technical solution, in this application, the training device may estimate, based on performance of the AI model, a quantity of training datasets required when the AI model is trained to the converged state, and indicate the quantity to the network device, so that the network device delivers the training datasets based on the indication, to reduce a waste of the air interface resources.

In a possible implementation, the configuration information of the reference signal includes at least one of the following: an identifier of the reference signal, a time domain resource of the reference signal, a frequency domain resource of the reference signal, a transmission periodicity of the reference signal, or a type of the transmitted reference signal.

For example, the type of the reference signal is an SSB, a CSI-RS, or an SRS. The identifier of the reference signal may also be understood as an identifier of a group of reference signals. For example, the configuration information of the reference signal includes group identifiers of N (N is an integer greater than or equal to 1) groups of reference signals, where each group of reference signals in the N groups of reference signals has a same group identifier, and each group of reference signals includes at least one reference signal. Similarly, the time domain resource of the reference signal, the frequency domain resource of the reference signal, the transmission periodicity of the reference signal, and the type of the transmitted reference signal may also be understood as time domain resources of the N groups of reference signals, frequency domain resources of the N groups of reference signals, transmission periodicities of the N groups of reference signals, and types of the N groups of transmitted reference signals.

Based on the foregoing technical solution, in this application, because the training dataset may be the measurement result of the reference signal, the training device may determine the configuration information of the reference signal based on the historical information, and may indirectly indicate the quantity of required training datasets by using the configuration information of the reference signal.

In this application, the "configuration information of an input of the AI model" may be understood as, for example, that the training device determines the input information of the AI model based on the historical information about AI model training. For example, the input information of the AI model is a measurement result of a reference signal corresponding to a sparse beam pattern. In this case, the training device may determine that the sparse beam pattern includes a beam at a specific location in the full codebook. For example, the training device may report, to the first network device, information such as an identifier of the sparse beam pattern, an identifier of the reference signal corresponding to the sparse beam pattern, or the measurement result of the reference signal, so that the first network device can deliver a training dataset corresponding to the beam pattern.

Based on the foregoing technical solution, in this application, because the input information of the AI model may be the measurement result of the reference signal, the training device may determine the configuration information of the input of the AI model based on the historical information, and may indirectly indicate the quantity of required training datasets by using the configuration information of the input of the AI model.

In a possible implementation, the first information includes at least one of the following: identification information of the AI model, information about an application scenario of the AI model, usage information of the AI model, or information about a computing capability of the training device.

In this application, for example, the network device may store a first mapping relationship. The first mapping relationship is a correspondence between an identifier of each AI model and a size of a training dataset corresponding to the identifier of the AI model. The training device may indicate, by indicating, to the network device, the identifier of the AI model, the size of the training dataset required for training the AI model.

It should be noted that the "mapping relationship" in this application may also be expressed as an "association relationship" or a "correspondence". It should be understood that the "mapping relationship" in embodiments of this application may be stored or recorded by using a function relationship, a table, a mapping relationship, or the like. In the following embodiments, the "mapping relationship" may be configured by the network device, or may be predefined in a protocol, or the like. This is not limited.

An application scenario of the AI model or usage of the AI model may be understood as that the AI model is used in a beam management scenario, a CSI feedback scenario, a positioning scenario, or the like. The training device may indicate, by indicating, to the network device, the application scenario of the AI model or the usage of the AI model, the size of the training dataset required for training the AI model.

In this application, the training device may further report the computing capability. For example, the information about the computing capability reported by the training device includes at least one of the following: a capability of a processor (for example, a central processing unit (central processing unit, CPU), a graphics processing unit (graphics processing unit, GPU), a tensor processor (tensor processing unit, TPU), a neural network processing unit (neural network processing unit, NPU), a field-programmable gate array (field-programmable gate array, FPGA), or the like) of the training device, a size of storage space of the training device, a size of a memory of the training device, a battery level of the training device, and the like. This is not limited. The training device may indicate, by reporting, to the network device, the computing capability of the training device, a maximum quantity of training datasets that can be processed during training of the AI model.

In a possible implementation, the method further includes: training the AI model based on the first training dataset, and determining performance of the AI model; sending second information to the network device based on the performance of the AI model, where the second information indicates related information of a second training dataset that the training device requests the network device to send; and receiving the second training dataset from the network device, where the second training dataset is a training dataset based on the related information indicated by the second information, and the second training dataset is used for training the AI model.

For example, a data amount of the second training dataset may be less than a data amount of the first training dataset. Subsequently, the training device may still train the AI model based on the second training dataset, and perform iterations repeatedly. For example, the training device performs model training based on the second training dataset, re-determines performance of the AI model, and determines a size of a required third training dataset based on the performance of the AI model. It is assumed that the training device may perform training for L (L is an integer greater than 1) times until the training device determines that the AI model is converged (the "model is converged" may also be understood as that the AI model reaches target performance).

Based on the foregoing technical solution, in this application, the training device may determine, by measuring AI model training performance, a size of a training dataset required for next training, so that AI model training efficiency can be improved, and use performance of the air interface resources can be improved.

According to a second aspect, a training dataset obtaining method is provided. The method may be performed by a first network device, or may be performed by a component (for example, a chip or circuit) of a first network device. This is not limited.

For same beneficial effects corresponding to the network side technical solution, refer to descriptions of beneficial effects on a training device side. Details are not described herein again.

The method includes: receiving first information from a training device, where the first information indicates related information of a first training dataset that the first network device is requested to send; and sending the first training dataset to the training device based on the related information indicated by the first information, where the first training dataset is used for training the artificial intelligence AI model.

In a possible implementation, the related information includes at least one of the following: information about a size of the first training dataset, configuration information of an input of the AI model, or configuration information of a reference signal used for training the AI model.

In a possible implementation, the information about the size of the first training dataset is determined based on a size of a training dataset needed for completing training of the AI model.

In a possible implementation, the configuration information of the reference signal includes at least one of the following: an identifier of the reference signal, a time domain resource of the reference signal, a frequency domain resource of the reference signal, a transmission periodicity of the reference signal, or a type of the transmitted reference signal.

In a possible implementation, the first information includes at least one of the following: identification information of the AI model, information about an application scenario of the AI model, usage information of the AI model, or information about a computing capability of the training device.

In a possible implementation, the method further includes: obtaining third information from a second network device, where the third information is related information for training the AI model, and the first network device is a target network device to which the training device is handed over from the second network device; and the sending the first training dataset to the training device based on the related information indicated by the first information includes: sending the first training dataset to the training device based on the related information indicated by the first information, and the third information.

Based on the foregoing technical solution, in this application, the first network device may comprehensively determine, in combination with various information, whether to support training of the AI model, and the network device does not continuously deliver the training dataset to the training device, so that unnecessary air interface resource occupation can be reduced, air interface overheads can be reduced, and use performance of air interface resources can

EP 4 592 872 A1

be improved.

In a possible implementation, the third information includes at least one of the following: information about a size of a training dataset that the training device requests the second network device to send, information about the size of the training dataset needed for completing training of the AI model, the identification information of the AI model, or the information about the computing capability of the training device.

For example, the first network device stores a first mapping relationship, and the first mapping relationship is a mapping relationship between an identifier of an AI model and a size of a training dataset corresponding to the identifier of the AI model.

For example, the "information about a size of a training dataset that the training device requests the second network device to send" may be understood as: When the second network device is connected to the training device, the training device requests the information about the size of the required training dataset from the second network device. For example, the training device may also determine, based on historical information, the size of the training dataset requested from the second network device. For example, the "information about the size of the training dataset needed for completing training of the AI model" may be understood as that the second network device stores a total size of a training dataset required for training the AI model by the training device.

Based on the foregoing technical solution, in this application, the first network device may obtain, from the second network device, the information for training the AI model, so that the first network device can jointly determine, based on indication information of the training device and information synchronized from the second network device, a size of a training data that can be delivered to the training device, to improve the use performance of the air interface resources.

In a possible implementation, the third information further includes: information about duration of sending the training dataset and/or information about a manner of sending the training dataset, and the method further includes: determining, based on the third information and a resource usage status of the first network device, whether the first network device and/or the training device have/has a capability of supporting training of the AI model.

The "information about a manner of sending the training dataset" may also be understood as, for example, the second network device periodically sends the training dataset to the training device. For example, the network device may identify a time period in which a data request quantity is the smallest in a day, which may alternatively be understood as a time period in which the smallest air interface resources are occupied or a time period in which air interface resources are sufficient. In this case, the training dataset can be provided for the AI model. For example, the network device may select the time period every day to support update of the AI model (herein, a quantity of training devices and/or a quantity of AI models are not limited). For another example, the second network device sends the training dataset to the training device at intervals. Compared with periodic sending, this solution has some improvement in flexibility. If the network device finds and/or determines that a current data request quantity is relatively small and air interface resources are sufficient, the network device determines that the network device can support update of the AI model. In other words, in this implementation, the network device may determine, based on an air interface resource occupation status at a current moment, to send the training dataset to the training device. Therefore, this implementation does not have an obvious periodic feature.

In this application, the "resource usage status" may also be understood as the "resource occupation status", "air interface resource occupation", or the like. For example, an existing protocol framework has defined a maximum quantity of reference signals (for example, 64 CSI-RSs) that can be configured by the network device. If the network device finds that all reference signals have been configured for another function, the network device may determine that a current resource is occupied, and cannot configure a reference signal resource for the training device to support update of the AI model.

Based on the foregoing technical solution, in this application, the first network device may obtain, from the second network device, the information for training the AI model, so that the first network device can jointly determine, based on indication information of the training device, information synchronized from the second network device, and the air interface resource occupation status, a size of a training data that can be delivered to the training device, to improve air interface resource utilization.

According to a third aspect, a training dataset obtaining method is provided. The method may be performed by a first network device, or may be performed by a component (for example, a chip or circuit) of a first network device. This is not limited.

The method includes: The first network device obtains third information from a second network device, where the third information is related information for training an artificial intelligence AI model, and the first network device is a target network device to which a training device is handed over from the second network device; the first network device receives first information from the training device, where the first information is used to request the first network device to send a training dataset; and first network device determines a to-be-sent first training dataset based on the third information, and the first network device sends the first training dataset to the training device based on the first information, where the first training dataset is used for training the AI model.

Based on the foregoing technical solution, in this application, the first network device may obtain, from the second

5

network device, the information for training the AI model, so that the first network device can jointly determine, based on indication information of the training device and information synchronized from the second network device, a size of a training data that can be delivered to the training device, to improve use performance of air interface resources.

In a possible implementation, the third information includes at least one of the following: information about a size of a training dataset that the training device requests the second network device to send, information about a size of a training dataset needed for completing training of the AI model, identification information of the AI model, or information about a computing capability of the training device.

In a possible implementation, the first network device stores a first mapping relationship, and the first mapping relationship is a mapping relationship between an identifier of the AI model and a size of a training dataset corresponding to the identifier of the AI model.

In a possible implementation, the third information further includes information about duration of sending the training dataset and/or information about a manner of sending the training dataset. The method further includes: The first network device determines, based on the third information and a resource usage status of the first network device, whether the first network device and/or the training device have/has a capability of supporting training of the AI model.

In a possible implementation, that the first network device determines a to-be-sent first training dataset based on the third information includes: The first network device determines the to-be-sent first training dataset based on the first information and the third information, where the first information indicates related information of the first training dataset that the first network device is requested to send.

In a possible implementation, the related information includes at least one of the following: information about a size of the first training dataset, input information of the AI model, or configuration information of a reference signal used for training the AI model.

In a possible implementation, the information about the size of the first training dataset is determined based on the size of the training dataset needed for completing training of the AI model.

In a possible implementation, the configuration information of the reference signal includes at least one of the following: an identifier of the reference signal, a time domain resource of the reference signal, a frequency domain resource of the reference signal, a transmission periodicity of the reference signal, or a type of the transmitted reference signal.

In a possible implementation, the first information includes at least one of the following: the identification information of the AI model, information about an application scenario of the AI model, usage information of the AI model, or the information about the computing capability of the training device.

In a possible implementation, the method further includes: receiving second information from the training device, where the second information indicates related information of a second training dataset that the first network device is requested to send, the second information is determined based on performance of the AI model, and the performance of the AI model is determined through training based on the first training dataset; and determining the to-be-sent second training dataset based on the second information.

According to a fourth aspect, a communication method is provided. The method may be performed by a training device, or may be performed by a component (for example, a chip or circuit) of a training device. This is not limited.

The method includes: measuring N groups of reference signals, and obtaining N groups of measurement results corresponding to the N groups of reference signals, where each group of reference signals in the N groups of reference signals includes at least one reference signal, each group of reference signals has a same group identifier, and N is an integer greater than 1; receiving fourth information from a network device, where the fourth information indicates M groups of reference signals in the N groups of reference signals; and determining first input information of an artificial intelligence AI model based on the fourth information and the N groups of measurement results corresponding to the N groups of reference signals, where the first input information includes M groups of measurement results corresponding to the M groups of reference signals; and the AI model is used to obtain first output information based on the first input information, where the first output information includes respective group identifiers of K groups of reference signals in the N groups of reference signals, and the respective group identifiers of the K groups of reference signals correspond to K groups of measurement results with best channel quality in the N groups of measurement results. Each group of measurement results may include one or more measurement results.

Based on the foregoing technical solution, in this application, in a plurality of subsequent training processes, a sparse beam pattern may still be a beam pattern indicated by the fourth information. During each training, the training device may perform one full codebook sweeping based on a training dataset delivered by a first network device. Because a channel state (which may also be understood as a channel environment) is time-varying, measurement results of reference signals obtained after each full codebook sweeping are incompletely the same. Therefore, during each training, the M groups of reference signals in the N groups of reference signals correspond to different measurement results, and training labels determined by the training device are also different. In other words, the input information and the training label of the AI model change correspondingly. However, these changes are essentially caused by a channel state change, and the beam pattern does not change. In other words, in the solution provided in this application, a variable in an AI model training process is only a channel state. Compared with another solution in which both a beam pattern and a channel state change in the AI model training process, the solution provided in this application can accelerate a convergence speed of the AI model, improve model training efficiency, and also reduce occupation of the air interface resources.

In this application, a group identifier of one group of reference signals may correspond to one beam identifier, and N group identifiers of the N groups of reference signals correspond to N beam identifiers.

In a possible implementation, the first output information further includes respective group identifiers of remaining (N-K) groups of reference signals in the N groups of measurement results, and the respective group identifiers of the (N-K) groups of reference signals correspond to (N-K) groups of measurement results.

In this application, a classification method and a regression method may be used during AI model training, and different training methods respectively correspond to input information and output information of different AI models. For example, in the classification method, the input information of the AI model is a measurement result of a reference signal, and the output information is identifiers of K beams with best channel quality in a full codebook predicted by the AI model. For another example, in the regression method, the input information of the AI model is a measurement result of a reference signal (for example, RSRP, RSRQ, and an SINR of the reference signal), and the output information is measurement results of all reference signals in a full codebook predicted by the AI model.

In a possible implementation, the fourth information includes N fields, the N fields are in one-to-one correspondence with the N groups of reference signals, and bit values of M fields in the N fields are different from bit values of remaining (N-M) fields; and that the fourth information indicates M groups of reference signals in the N groups of reference signals specifically includes: The M fields in the fourth information indicate the M groups of reference signals.

Based on the foregoing technical solution, in this application, the network device may indicate a sparse beam pattern to the training device by indicating a bit value of each field in the fourth information. In other words, the training device may obtain the input information of the AI model by parsing the fourth information, to accelerate a convergence speed of the AI model and improve training efficiency of the AI model.

In a possible implementation, the method further includes: receiving fifth information from the network device, where the fifth information indicates P groups of reference signals in the N groups of reference signals, the fifth information includes N fields, the N fields are in one-to-one correspondence with the N groups of reference signals, and bit values of P fields in the N fields are different from bit values of remaining (N-P) fields; and that the fifth information indicates P groups of reference signals in the N groups of reference signals specifically includes: The P fields in the fifth information indicate the P groups of reference signals.

Based on the foregoing technical solution, in this application, the network device may indicate a plurality of sparse beam patterns to the training device by indicating a bit value of each field in the fourth information and the fifth information. In other words, the training device may obtain a plurality of pieces of input information of the AI model by parsing the fourth information and the fifth information, to accelerate a convergence speed of the AI model and improve training efficiency of the AI model.

In a possible implementation, the method further includes: receiving configuration information from the network device, where the configuration information indicates one or more of the following: time domain resources of the N groups of reference signals, frequency domain resources of the N groups of reference signals, transmission periodicities of the N groups of reference signals, or group identifiers of the N groups of reference signals.

For example, the configuration information and the fourth information and/or the fifth information may also be sent in a same message. This is not limited.

Based on the foregoing technical solution, in this application, the network device may send the configuration information of the N groups of reference signal to the training device, so that the training device can obtain the training dataset by measuring the N groups of reference signals, to train the AI model.

According to a fifth aspect, a communication method is provided. The method may be performed by a network device, or may be performed by a component (for example, a chip or circuit) of a network device. This is not limited.

The method includes: sending N groups of reference signals to a training device, where each group of reference signals in the N groups of reference signals includes at least one reference signal, each group of reference signals has a same group identifier, and N is an integer greater than 1; and sending fourth information to the training device, where the fourth information indicates M groups of reference signals in the N groups of reference signals, and the M groups of reference signals are used to determine first input information; and an AI model is used to obtain first output information based on the first input information, where the first output information includes respective group identifiers of K groups of reference signals in the N groups of reference signals, and the respective group identifiers of the K groups of reference signals correspond to K groups of measurement results with best channel quality in N groups of measurement results corresponding to the N groups of reference signals. Each group of measurement results may include one or more measurement results.

In a possible implementation, the first output information further includes respective group identifiers of remaining (N-K) groups of reference signals in the N groups of measurement results, and the respective group identifiers of the (N-K) groups of reference signals correspond to (N-K) groups of measurement results.

In a possible implementation, the fourth information includes N fields, the N fields are in one-to-one correspondence with the N groups of reference signals, and bit values of M fields in the N fields are different from bit values of remaining (N-M) fields; and that the fourth information indicates M groups of reference signals in the N groups of reference signals specifically includes: The M fields in the fourth information indicate the M groups of reference signals.

In a possible implementation, the method further includes: sending fifth information to the training device, where the fifth information indicates P groups of reference signals in the N groups of reference signals, the fifth information includes N fields, the N fields are in one-to-one correspondence with the N groups of reference signals, and bit values of P fields in the N fields are different from bit values of remaining (N-P) fields; and that the fifth information indicates P groups of reference signals in the N groups of reference signals specifically includes: The P fields in the fourth information indicate the P groups of reference signals.

In a possible implementation, the method further includes: sending configuration information to the training device, where the configuration information indicates one or more of the following: time domain resources of the N groups of reference signals, frequency domain resources of the N groups of reference signals, transmission periodicities of the N groups of reference signals, or group identifiers of the N groups of reference signals.

According to a sixth aspect, a communication method is provided. The method may be performed by a training device, or may be performed by a component (for example, a chip or circuit) of a training device. This is not limited.

The method includes: receiving a second reference signal set, where the second reference signal set includes N groups of reference signals, each group of reference signals in the N groups of reference signals includes at least one reference signal, and N is an integer greater than 1; and receiving second beam indication information, where the second beam indication information indicates a beam corresponding to a first reference signal set, the beam corresponding to the first reference signal set is a subset of a plurality of beams corresponding to the second reference signal set, the beam corresponding to the first reference signal set is used to determine first input information of an AI model in the training device, the first input information is based on a measurement result of the beam corresponding to the first reference signal set, the first reference signal set includes M groups of reference signals, N is an integer greater than M, and M is an integer greater than or equal to 1; and the AI model is used to obtain first output information based on the first input information, where the first output information indicates K beams that are predicted to have best channel quality in the plurality of beams corresponding to the second reference signal set, K is an integer greater than or equal to 1, K is less than N, and a label of the AI model is the K beams with best channel quality in measurement results of the second reference signal set.

Based on the foregoing technical solution, in this application, the training device may determine a sparse beam pattern by using the received second beam indication information. It may also be understood that, the training device may determine, based on the second beam indication information, specific beams in a full codebook that constitute the sparse beam pattern, and may further determine input information of the AI model. In this case, because the sparse beam pattern does not change and only a channel state changes in a training process, this solution can accelerate convergence of the AI model, and improve training efficiency of the AI model.

In a possible implementation, that the first output information indicates K beams that are predicted to have best channel quality in the plurality of beams corresponding to the second reference signal set includes at least one of the following: information about the K beams that are predicted to have the best channel quality in the plurality of beams corresponding to the second reference signal set; or respective group identifiers of K groups of reference signals, where the K groups of reference signals correspond to K measurement results that are predicted to have best channel quality in N measurement results corresponding to the N groups of reference signals, and a predefined or preconfigured correspondence exists between the respective group identifiers of the K groups of reference signals and the K beams; or a plurality of pieces of beam information corresponding to the N groups of reference signals and N measurement results corresponding to the beam information; or respective group identifiers of the N groups of reference signals and N measurement results of the N groups of reference signals, where a predefined or preconfigured correspondence exists between the N groups of reference signals and N beams.

Based on the foregoing technical solution, in this application, output information of the AI model may be slightly different based on implementation of an algorithm of the AI model. For example, output information of the AI model in a classification method is the information about the K (K is an integer greater than 0) beams that are predicted to have the best channel quality in the plurality of beams corresponding to the second reference signal set. For another example, output information of the AI model in a regression method is the N measurement results corresponding to the N groups of reference signals.

In a possible implementation, that the second beam indication information indicates a beam corresponding to a first reference signal set includes: The second beam indication information indicates a location of the beam corresponding to the first reference signal set in the plurality of beams corresponding to the second reference signal set.

Based on the foregoing technical solution, in this application, the second beam indication information may indicate the location of the beam corresponding to the first reference signal set in the plurality of beams corresponding to the second reference signal set, to indicate the sparse beam pattern. It may also be understood that the training device may determine, based on the second beam indication information, beams in a full codebook corresponding to reference signals in a reference signal group in the first reference signal set, to determine the input information of the AI model.

In a possible implementation, the second beam indication information includes N fields, the N fields are in one-to-one correspondence with the plurality of beams corresponding to the second reference signal set, and bit values of M fields in the N fields are different from bit values of remaining (N-M) fields; and that the second beam indication information indicates a beam corresponding to a first reference signal set includes: The M fields in the second beam indication information correspond to the first reference signal set.

Based on the foregoing technical solution, in this application, the M fields in the N fields may directly indicate the sparse beam pattern, or it may be understood that the M fields in the N fields may directly indicate specific beams in the full codebook that constitute the sparse beam pattern, so that the training device can determine the input information of the AI model.

In a possible implementation, the method further includes: sending first configuration information to the training device, where the first configuration information indicates one or more of the following: time domain resources of the N groups of reference signals, frequency domain resources of the N groups of reference signals, transmission periodicities of the N groups of reference signals, the group identifiers of the N groups of reference signals, or the beam information of the N groups of reference signals.

Based on the foregoing technical solution, in this application, the first configuration information may indicate how the training device needs to receive the N groups of reference signals, for example, time-frequency resources on which the training device needs to receive the N groups of reference signals.

In a possible implementation, that the second beam indication information indicates beams corresponding to the M groups of reference signals includes: The second beam indication information includes group identifiers or beam information of the M groups of reference signals, the M groups of reference signals are a part of the N groups of reference signals, and the predefined or preconfigured correspondence exists between the N groups of reference signals and the N beams.

Based on the foregoing technical solution, because there is a one-to-one correspondence between the N groups of reference signals and the N beams, the sparse beam pattern may be indicated by indicating the group identifiers or the beam information of the M groups of reference signals.

In a possible implementation, third configuration information of the N groups of reference signals is sent to the training device. When the second beam indication information includes the group identifiers of the M groups of reference signals, the third configuration information of the N groups of reference signals includes the respective group identifiers of the N groups of reference signals, and indicates one or more of the following: the time domain resources of the N groups of reference signals, the frequency domain resources of the N groups of reference signals, the transmission periodicities of the N groups of reference signals, or beams of the N groups of reference signals. That the M groups of reference signals are a part of the N groups of reference signals includes: N group identifiers of the N groups of reference signals include M group identifiers of the M groups of reference signals; or when the second beam indication information includes the beam information of the M groups of reference signals, the third configuration information of the N groups of reference signals includes the respective beam information of the N groups of reference signals, and indicates one or more of the following: the group identifiers of the N groups of reference signals, a time domain resource, the frequency domain resources of the N groups of reference signals, or the transmission periodicities of the N groups of reference signals; and that the M groups of reference signals are a part of the N groups of reference signals includes: N group identifiers of the N groups of reference signals include M group identifiers of the M groups of reference signals.

Based on the foregoing technical solution, in this application, the third configuration information may include the identifiers of the N groups of reference signals, and the M groups of reference signals belong to the N groups of reference signals. Therefore, the second beam indication information may include the identifiers of the M groups of reference signals or the beam information of the M groups of reference signals, to indicate specific beams in a full codebook that constitute the sparse beam pattern, so that the training device can determine the input information of the AI model.

In a possible implementation, the method further includes: measuring the N groups of reference signals to obtain the N measurement results, where the N measurement results correspond to the N beams, and the N measurement results include the measurement result of the beam corresponding to the first reference signal set.

Based on the foregoing technical solution, in this application, the training device may obtain the N groups of measurement results by measuring the N groups of reference signals, and determine the input information of the AI model based on the second beam information.

According to a seventh aspect, a communication method is provided. The method may be performed by a network device, or may be performed by a component (for example, a chip or circuit) of a network device. This is not limited.

The method includes: sending a second reference signal set to a training device, where the second reference signal set includes N groups of reference signals, each group of reference signals in the N groups of reference signals includes at least one reference signal, and N is an integer greater than 1; and sending second beam indication information to the training device, where the second beam indication information indicates a beam corresponding to a first reference signal set, the beam corresponding to the first reference signal set is a subset of a plurality of beams corresponding to the second reference signal set, the beam corresponding to the first reference signal set is used to determine first input information of an AI model in the training device, the first input information is based on a measurement result of the beam corresponding to the first reference signal set, the first reference signal set includes M groups of reference signals, N is an integer greater than M, and M is an integer greater than or equal to 1; and the AI model is used to obtain first output information based on the first input information, where the first output information indicates K beams that are predicted to have best channel quality in the plurality of beams corresponding to the second reference signal set, K is an integer greater than or equal to 1, K is less than N, and a label of the AI model is the K beams with best channel quality in measurement results of the second reference signal set.

In a possible implementation, that the first output information indicates K beams that are predicted to have best channel quality in the plurality of beams corresponding to the second reference signal set includes at least one of the following: information about the K beams that are predicted to have the best channel quality in the plurality of beams corresponding to the second reference signal set; or respective group identifiers of K groups of reference signals, where the K groups of reference signals correspond to K measurement results that are predicted to have best channel quality in N measurement results corresponding to the N groups of reference signals, and a predefined or preconfigured correspondence exists between the respective group identifiers of the K groups of reference signals and the K beams; or a plurality of pieces of beam information corresponding to the N groups of reference signals and N measurement results corresponding to the beam information; or respective group identifiers of the N groups of reference signals and N measurement results of the N groups of reference signals, where a predefined or preconfigured correspondence exists between the N groups of reference signals and N beams.

In a possible implementation, that the second beam indication information indicates a beam corresponding to a first reference signal set includes: The second beam indication information indicates a location of the beam corresponding to the first reference signal set in the plurality of beams corresponding to the second reference signal set.

In a possible implementation, the second beam indication information includes N fields, the N fields are in one-to-one correspondence with the plurality of beams corresponding to the second reference signal set, and bit values of M fields in the N fields are different from bit values of remaining (N-M) fields; and that the second beam indication information indicates a beam corresponding to a first reference signal set includes: The M fields in the second beam indication information correspond to the first reference signal set.

In a possible implementation, the method further includes: sending first configuration information to the training device, where the first configuration information indicates one or more of the following: time domain resources of the N groups of reference signals, frequency domain resources of the N groups of reference signals, transmission periodicities of the N groups of reference signals, the group identifiers of the N groups of reference signals, or the beam information of the N groups of reference signals.

In a possible implementation, that the second beam indication information indicates beams corresponding to the M groups of reference signals includes: The second beam indication information includes group identifiers or beam information of the M groups of reference signals, the M groups of reference signals are a part of the N groups of reference signals, and the predefined or preconfigured correspondence exists between the N groups of reference signals and the N beams.

In a possible implementation, the method further includes: sending third configuration information of the N groups of reference signals to the training device. When the second beam indication information includes the group identifiers of the M groups of reference signals, the third configuration information of the N groups of reference signals includes the respective group identifiers of the N groups of reference signals, and indicates one or more of the following: the time domain resources of the N groups of reference signals, the frequency domain resources of the N groups of reference signals, the transmission periodicities of the N groups of reference signals, or beams of the N groups of reference signals. That the M groups of reference signals are a part of the N groups of reference signals includes: N group identifiers of the N groups of reference signals include M group identifiers of the M groups of reference signals; or when the second beam indication information includes the beam information of the M groups of reference signals, the third configuration information of the N groups of reference signals includes the respective beam information of the N groups of reference signals, and indicates one or more of the following: the group identifiers of the N groups of reference signals, a time domain resource, the frequency domain resources of the N groups of reference signals, or the transmission periodicities of the N groups of reference signals; and that the M groups of reference signals are a part of the N groups of reference signals includes: N group identifiers of the N groups of reference signals include M group identifiers of the M groups of reference signals.

According to an eighth aspect, a communication method is provided. The method may be performed by a terminal device, or may be performed by a component (for example, a chip or circuit) of a terminal device. This is not limited. The terminal device may serve as an inference device.

The method includes: receiving a first reference signal set, where the first reference signal set includes M groups of reference signals, each group of reference signals in the M groups of reference signals includes at least one reference signal, and M is an integer greater than or equal to 1; and receiving first beam indication information, where the first beam indication information indicates a beam corresponding to the first reference signal set, the first reference signal set is used to determine first input information of the AI model, the first input information is based on measurement results of the M groups of reference signals included in the first reference signal set, the beam corresponding to the first reference signal set is a subset of a plurality of beams corresponding to a second reference signal set, the second reference signal set includes N groups of reference signals, and N is an integer greater than or equal to M; and the AI model is used to obtain first output information based on the first input information, where the first output information indicates K beams that are predicted to have best channel quality in the plurality of beams corresponding to the second reference signal set, K is an integer greater than or equal to 1, and K is less than N.

Based on the foregoing technical solution, in this application, in a model inference phase, a network device may also indicate input information of a model to the terminal device, so that the terminal device determines the input information of the model. This can improve accuracy of information output by the terminal device during model inference.

In a possible implementation, that the first output information indicates K beams that are predicted to have best channel quality in the plurality of beams corresponding to the second reference signal set includes at least one of the following: information about the K beams that are predicted to have the best channel quality in the plurality of beams corresponding to the second reference signal set; or respective group identifiers of K groups of reference signals, where the K groups of reference signals correspond to K measurement results that are predicted to have best channel quality in N measurement results corresponding to the N groups of reference signals, and a predefined or preconfigured correspondence exists between the respective group identifiers of the K groups of reference signals and the K beams; or a plurality of pieces of beam information corresponding to the N groups of reference signals and N measurement results corresponding to the beam information; or respective group identifiers of the N groups of reference signals and N measurement results of the N groups of reference signals, where a predefined or preconfigured correspondence exists between the N groups of reference signals and N beams.

Based on the foregoing technical solution, in this application, inference output information of the AI model may be slightly different based on implementation of an algorithm of the AI model. For example, the inference output information of the AI model in a classification method is information about K (K is an integer greater than 0) beams that are predicted to have best channel quality in the plurality of beams corresponding to the second reference signal set. For another example, the inference output information of the AI model in a regression method is the N measurement results corresponding to the N groups of reference signals.

In a possible implementation, that the first beam indication information indicates a beam corresponding to the first reference signal set includes: The first beam indication information indicates a location of the beam corresponding to the first reference signal set in the plurality of beams corresponding to the second reference signal set.

Based on the foregoing technical solution, in this application, the first beam indication information may indicate the location of the beam corresponding to the first reference signal set in the plurality of beams corresponding to the second reference signal set, to indicate a sparse beam pattern. It may also be understood that the terminal device may determine, based on the first beam indication information, beams in a full codebook corresponding to reference signals in a reference signal group in the first reference signal set, to determine the input information of the AI model.

In a possible implementation, the first beam indication information includes N fields, the N fields are in one-to-one correspondence with the plurality of beams corresponding to the second reference signal set, and bit values of M fields in the N fields are different from bit values of remaining (N-M) fields; and that the first beam indication information indicates a beam corresponding to the first reference signal set includes: The M fields in the first beam indication information correspond to the first reference signal set.

Based on the foregoing technical solution, in this application, the M fields in the N fields may directly indicate the sparse beam pattern, or it may be understood that the M fields in the N fields may directly indicate specific beams in the full codebook that constitute the sparse beam pattern, so that the terminal device can determine the input information of the AI model.

In a possible implementation, the method further includes: receiving first configuration information, where the first configuration information indicates one or more of the following: time domain resources of the M groups of reference signals, frequency domain resources of the M groups of reference signals, transmission periodicities of the M groups of reference signals, group identifiers of the M groups of reference signals, or beam information of the M groups of reference signals.

Based on the foregoing technical solution, in this application, the first configuration information may indicate how the terminal device needs to receive the M groups of reference signals, for example, time-frequency resources on which the terminal device needs to receive the M groups of reference signals.

In a possible implementation, the first beam indication information indicates beams corresponding to the M groups of reference signals. In a possible implementation, that the first beam indication information indicates beams corresponding to the M groups of reference signals includes: The first beam indication information includes the group identifiers or the beam information of the M groups of reference signals, the M groups of reference signals are a part of the N groups of reference signals, and the predefined or preconfigured correspondence exists between the N groups of reference signals and the N beams.

Based on the foregoing technical solution, because there is a one-to-one correspondence between the N groups of reference signals and the N beams, the sparse beam pattern may be indicated by indicating the group identifiers or the beam information of the M groups of reference signals.

In a possible implementation, the first beam indication information is included in second configuration information of the M groups of the reference signals; and when the first beam indication information includes the group identifiers of the M groups of reference signals, the second configuration information further includes one or more of the time domain resources, the frequency domain resources, the transmission periodicities, or the beam information of the M groups of reference signals; or when the first beam indication information includes the beam information of the M groups of reference signals, the second configuration information further includes one or more of the time domain resources, the frequency domain resources, the transmission periodicities, or the group identifiers of the M groups of reference signals.

Based on the foregoing technical solution, in this application, the second configuration information may include the first beam indication information, and the first beam indication information includes the group identifiers of the M groups of reference signals or the beam information of the M groups of reference signals, to indicate specific beams in a full codebook that constitute the sparse beam pattern, so that the terminal device can determine the input information of the AI model.

In a possible implementation, the method further includes: receiving third configuration information of the N groups of reference signals. When the first beam indication information includes the group identifiers of the M groups of reference signals, the third configuration information of the N groups of reference signals includes the respective group identifiers of the N groups of reference signals, and indicates one or more of the following: time domain resources of the N groups of reference signals, frequency domain resources of the N groups of reference signals, transmission periodicities of the N groups of reference signals, or beams of the N groups of reference signals; and that the M groups of reference signals are a part of the N groups of reference signals includes: N group identifiers of the N groups of reference signals include M group identifiers of the M groups of reference signals; or when the first beam indication information includes the beam information of the M groups of reference signals, the third configuration information of the N groups of reference signals includes the respective beam information of the N groups of reference signals, and indicates one or more of the following: the group identifiers of the N groups of reference signals, a time domain resource, frequency domain resources of the N groups of reference signals, or transmission periodicities of the N groups of reference signals; and that the M groups of reference signals are a part of the N groups of reference signals includes: N group identifiers of the N groups of reference signals include M group identifiers of the M groups of reference signals.

Based on the foregoing technical solution, in this application, the third configuration information may include the identifiers of the N groups of reference signals, and the M groups of reference signals belong to the N groups of reference signals. Therefore, the first beam indication information may include the identifiers of the M groups of reference signals or the beam information of the M groups of reference signals, to indicate specific beams in a full codebook that constitute the sparse beam pattern, so that the terminal device can determine the input information of the AI model.

In a possible implementation, the method further includes: obtaining the first output information based on the first input information by using the AI model; and sending the first output information.

Based on the foregoing technical solution, in this application, after obtaining the inference output information through AI model inference, the terminal device may further feed back the output information to the network device, so that the network device can send a corresponding reference signal to the terminal device based on the output information. The terminal device measures reference signals again, determines a reference signal with an optimal measurement result, uses a beam identifier corresponding to the reference signal as a finally selected beam, and communicates with the network device by using the beam.

According to a ninth aspect, a communication method is provided. The method may be performed by a network device, or may be performed by a component (for example, a chip or circuit) of a network device. This is not limited.

The method includes: sending a first reference signal set to a terminal device, where the first reference signal set includes M groups of reference signals, each group of reference signals in the M groups of reference signals includes at least one reference signal, and M is an integer greater than or equal to 1; and sending first beam indication information to the terminal device, where the first beam indication information indicates a beam corresponding to the first reference signal set, the first reference signal set is used to determine first input information of the AI model, the first input information is based on measurement results of the M groups of reference signals included in the first reference signal set, the beam corresponding to the first reference signal set is a subset of a plurality of beams corresponding to a second reference signal set, the second reference signal set includes N groups of reference signals, and N is an integer greater than or equal to M; and the AI model is used to obtain first output information based on the first input information, where the first output information indicates K beams that are predicted to have best channel quality in the plurality of beams corresponding to the second reference signal set, K is an integer greater than or equal to 1, and K is less than N.

In a possible implementation, that the first output information indicates K beams that are predicted to have best channel quality in the plurality of beams corresponding to the second reference signal set includes at least one of the following: information about the K beams that are predicted to have the best channel quality in the plurality of beams corresponding to the second reference signal set; or respective group identifiers of K groups of reference signals, where the K groups of reference signals correspond to K measurement results that are predicted to have best channel quality in N measurement results corresponding to the N groups of reference signals, and a predefined or preconfigured correspondence exists between the respective group identifiers of the K groups of reference signals and the K beams; or a plurality of pieces of beam information corresponding to the N groups of reference signals and N measurement results corresponding to the beam information; or respective group identifiers of the N groups of reference signals and N measurement results of the N groups of reference signals, where a predefined or preconfigured correspondence exists between the N groups of reference signals and N beams.

In a possible implementation, that the first beam indication information indicates a beam corresponding to the first reference signal set includes: The first beam indication information indicates a location of the beam corresponding to the first reference signal set in the plurality of beams corresponding to the second reference signal set.

In a possible implementation, the first beam indication information includes N fields, the N fields are in one-to-one correspondence with the plurality of beams corresponding to the second reference signal set, and bit values of M fields in the N fields are different from bit values of remaining (N-M) fields; and that the first beam indication information indicates a beam corresponding to the first reference signal set includes: The M fields in the first beam indication information correspond to the first reference signal set.

In a possible implementation, the method further includes: sending first configuration information to the terminal device, where the first configuration information indicates one or more of the following: time domain resources of the M groups of reference signals, frequency domain resources of the M groups of reference signals, transmission periodicities of the M groups of reference signals, group identifiers of the M groups of reference signals, or beam information of the M groups of reference signals.

In a possible implementation, the first beam indication information indicates beams corresponding to the M groups of reference signals. In a possible implementation, that the first beam indication information indicates beams corresponding to the M groups of reference signals includes: The first beam indication information includes the group identifiers or the beam information of the M groups of reference signals, the M groups of reference signals are a part of the N groups of reference signals, and the predefined or preconfigured correspondence exists between the N groups of reference signals and the N beams.

In a possible implementation, the first beam indication information is included in second configuration information of the M groups of the reference signals; and when the first beam indication information includes the group identifiers of the M groups of reference signals, the second configuration information further includes one or more of the time domain resources, the frequency domain resources, the transmission periodicities, or the beam information of the M groups of reference signals; or when the first beam indication information includes the beam information of the M groups of reference signals, the second configuration information further includes one or more of the time domain resources, the frequency domain resources, the transmission periodicities, or the group identifiers of the M groups of reference signals.

In a possible implementation, the method further includes: sending third configuration information of the N groups of reference signals to the terminal device. When the first beam indication information includes the group identifiers of the M groups of reference signals, the third configuration information of the N groups of reference signals includes the respective group identifiers of the N groups of reference signals, and indicates one or more of the following: time domain resources of the N groups of reference signals, frequency domain resources of the N groups of reference signals, transmission periodicities of the N groups of reference signals, or beams of the N groups of reference signals; and that the M groups of reference signals are a part of the N groups of reference signals includes: N group identifiers of the N groups of reference signals include M group identifiers of the M groups of reference signals; or when the first beam indication information includes the beam information of the M groups of reference signals, the third configuration information of the N groups of reference signals includes the respective beam information of the N groups of reference signals, and indicates one or more of the following: the group identifiers of the N groups of reference signals, a time domain resource, frequency domain resources of the N groups of reference signals, or transmission periodicities of the N groups of reference signals; and that the M groups of reference signals are a part of the N groups of reference signals includes: N group identifiers of the N groups of reference signals include M group identifiers of the M groups of reference signals.

In a possible implementation, the method further includes: receiving the first output information from the terminal device.

According to a tenth aspect, a communication apparatus is provided. The apparatus is configured to perform the method according to any one of the possible implementations of the first aspect, the fourth aspect, the sixth aspect, and the eighth aspect. Specifically, the apparatus may include units and/or modules, for example, a transceiver unit and/or a processing unit, configured to perform the method according to any one of the possible implementations of the first aspect, the fourth aspect, the sixth aspect, and the eighth aspect.

In an implementation, the apparatus is a training device, an inference device, or a terminal device. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a training device, an inference device, or a terminal device. When the apparatus is the chip, the chip system, or the circuit used in the communication device, a communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to an eleventh aspect, a communication apparatus is provided. The apparatus is configured to perform the method according to any one of the possible implementations of the second aspect, the third aspect, the fifth aspect, the seventh aspect, and the ninth aspect. Specifically, the apparatus may include units and/or modules, for example, a transceiver unit and/or a processing unit, configured to perform the method according to any one of the possible implementations of the second aspect, the third aspect, the fifth aspect, the seventh aspect, and the ninth aspect.

In an implementation, the apparatus is a network device or a first network device. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network device or a first network device. When the apparatus is the chip, the chip system, or the circuit used in the communication device, a communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a twelfth aspect, a communication apparatus is provided. The apparatus includes at least one processor, configured to execute a computer program or instructions stored in a memory, to perform the method according to any one of the possible implementations of any one of the first aspect, the fourth aspect, the sixth aspect, and the eighth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a training device, an inference device, or a terminal device.

In another implementation, the apparatus is a chip, a chip system, or a circuit used in a training device, an inference device, or a terminal device.

According to a thirteenth aspect, a communication apparatus is provided. The apparatus includes at least one processor, configured to execute a computer program or instructions stored in a memory, to perform the method according to any one of the possible implementations of any one of the second aspect, the third aspect, the fifth aspect, the seventh aspect, and the ninth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network device or a first network device.

In another implementation, the apparatus is a chip, a chip system, or a circuit used in a network device or a first network device.

According to a fourteenth aspect, this application provides a processor, including an input circuit, an output circuit, and a processing circuit. The processing circuit is configured to: receive a signal through the input circuit, and transmit a signal through the output circuit, so that the processor performs the method according to any one of the possible implementations of any one of the first aspect to the ninth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a fifteenth aspect, a processing device is provided, including a processor and a memory. The processor is configured to: read instructions stored in the memory, receive a signal through a transceiver, and transmit a signal through a transmitter, to perform the method according to any one of the possible implementations of any one of the first aspect to the ninth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device according to the fifteenth aspect may be one or more chips. The processor in the processing device may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a sixteenth aspect, a computer-readable storage medium is provided. The computer-readable storage medium stores program code to be executed by a device, and the program code is used to perform the method according to any one of the possible implementations of the first aspect to the ninth aspect.

According to a seventeenth aspect, a computer program product including instructions is provided. When the computer program product is run on a computer, the computer is enabled to perform the method according to any one of the possible implementations of the first aspect to the ninth aspect.

According to an eighteenth aspect, a chip system is provided, including a processor configured to invoke a computer program from a memory and run the computer program, so that a device in which the chip system is installed performs the method according to the implementations of any one of the first aspect to the ninth aspect.

According to a nineteenth aspect, a communication system is provided. The communication system includes a training device and a network device. The training device is configured to perform the method according to any one of the possible implementations of the first aspect, and the network device is configured to perform the method according to any one of the possible implementations of the second aspect.

According to a twentieth aspect, a communication system is provided. The communication system includes a first network device. The first network device is configured to perform the method according to any one of the possible implementations of the third aspect.

According to a twenty-first aspect, a communication system is provided. The communication system includes a training device and a network device. The training device is configured to perform the method according to any one of the possible implementations of the fourth aspect, and the network device is configured to perform the method according to any one of the possible implementations of the fifth aspect.

According to a twenty-second aspect, a communication system is provided. The communication system includes a training device and a network device. The training device is configured to perform the method according to any one of the possible implementations of the sixth aspect, and the network device is configured to perform the method according to any one of the possible implementations of the seventh aspect.

According to a twenty-third aspect, a communication system is provided. The communication system includes an inference device like a terminal device, and a network device. The inference device like the terminal device is configured to perform the method according to any one of the possible implementations of the eighth aspect, and the network device is configured to perform the method according to any one of the possible implementations of the ninth aspect.

**BRIEF DESCRIPTION OF DRAWINGS**

FIG. 1 is a diagram of a structure of a communication system;
FIG. 2 is a diagram of a neuron structure;
FIG. 3 is a diagram of a layer relationship of a neural network;
FIG. 4 is a diagram of a framework of AI model training and inference according to this application;
FIG. 5 is a schematic flowchart of a training dataset obtaining method 500 according to this application;
FIG. 6 is a schematic flowchart of a training dataset obtaining method 600 according to this application;
FIG. 7 is a schematic flowchart of a method 700 for obtaining input information of an AI model according to this application;

FIG. 8 is a schematic flowchart of a communication method 800 according to this application;

FIG. 9 is a schematic flowchart of a communication method 900 according to this application;

FIG. 10 is a block diagram of a communication apparatus 100 according to this application; and

FIG. 11 is a block diagram of a communication apparatus 200 according to this application.

## DESCRIPTION OF EMBODIMENTS

The following describes technical solutions of embodiments in this application with reference to the accompanying drawings.

Technologies provided in this application may be applied to various communication systems. For example, the communication system may be a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, a satellite communication system, a future communication system, for example, a 6th generation (6th generation, 6G) mobile communication system, or a converged system of a plurality of systems. The 5G communication system may also be referred to as a new radio (new radio, NR) system, a satellite communication system, a future communication system, for example, a 6th generation (6th generation, 6G) mobile communication system, or a converged system of a plurality of systems.

A device in a communication system may send a signal to another device or receive a signal from another device, where the signal may include information, signaling, data, or the like. The device may also be replaced with an entity, a network entity, a communication device, a communication module, a node, a communication node, or the like. For example, the communication system may include at least one terminal device and at least one network device. For another example, the communication system may include one training device and at least one network device. The network device may send a downlink signal to the terminal device, and/or the terminal device may send an uplink signal to the access network device. In addition, it may be understood that if the communication system includes a plurality of terminal devices, the plurality of terminal devices may also send signals to each other. In other words, both a signal sending network element and a signal receiving network element may be terminal devices. It may be understood that the terminal device in this application may be replaced with a first device, the network device may be replaced with a second device, and the terminal device and the network device perform a corresponding communication method in this disclosure.

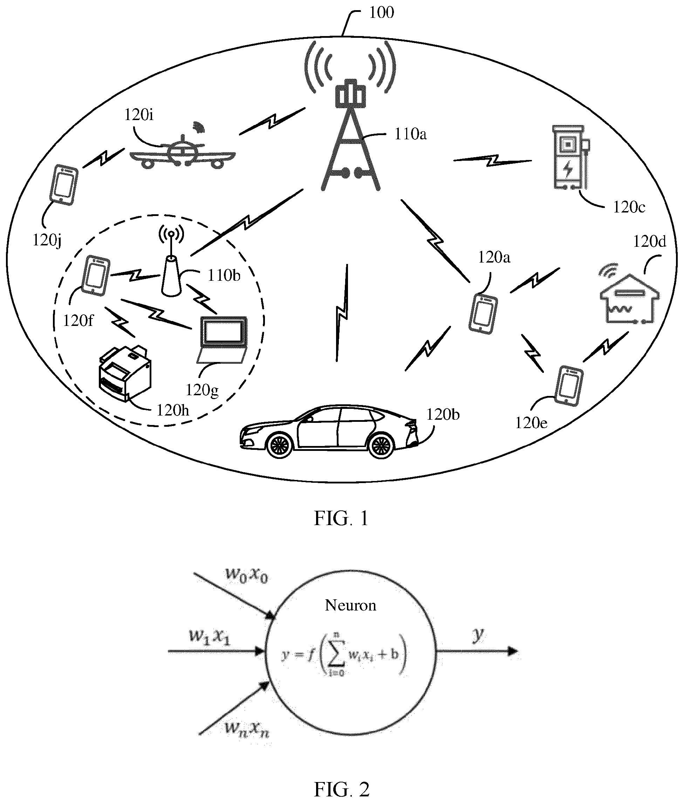

A method provided in embodiments of this application may be applied to a wireless communication system like 5G, 6G, or satellite communication. FIG. 1 is a simplified diagram of a wireless communication system according to an embodiment of this application. As shown in FIG. 1, the wireless communication system includes a radio access network 100 (an example of a network device). The radio access network 100 may be a next generation (for example, 6G or a higher version) radio access network, or a conventional (for example, 5G, 4G, 3G, or 2G) radio access network. One or more communication devices (120a to 120j, which are collectively referred to as 120) may be interconnected or connected to one or more network devices (110a and 110b, which are collectively referred to as 110) in the radio access network 100. Optionally, FIG. 1 is only a diagram. The wireless communication system may further include another device, for example, may further include a core network device, a wireless relay device, and/or a wireless backhaul device, which are not shown in FIG. 1.

Optionally, during actual application, the wireless communication system may include a plurality of network devices (for example, access network devices), or may include a plurality of communication devices. One network device may simultaneously serve one or more communication devices. One communication device may also simultaneously access one or more network devices. Quantities of communication devices and network devices included in the wireless communication system are not limited in this embodiment of this application.

The network device may be an entity that is configured to send or receive a signal on a network side. The network device may be an access device via which the communication device accesses the wireless communication system in a wireless manner. For example, the network device may be a base station. The base station may cover various names in the following in a broad sense, or may be replaced with the following names, for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmitting receiving point (transmitting receiving point, TRP), a transmitting point (transmitting point, TP), a master station MeNB, a secondary station SeNB, a multi-standard radio (MSR) node, a home base station, a network controller, an access node, a radio node, an access point (AP), a transmission node, a transceiver node, a baseband unit (BBU), a radio remote unit (RRU), an active antenna unit (AAU), a radio-frequency head (RRH), a central unit (CU), a distributed unit (DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, an analogue, or a combination thereof. Alternatively, the network device may be a communication module, a modem, or a chip disposed in the foregoing device or apparatus. Alternatively, the network device may be a mobile switching center, a device that takes on a base station function in device-to-device (Device-to-Device, D2D), vehicle-to-everything (vehicle-to-everything, V2X), and machine-to-machine (machine-to-machine, M2M) communication, a network side device in a 6G network, a device that takes on a base station function in a future communication system, or the like. The network device may support networks using a same access technology or different access technologies. A specific technology and a specific device form that are used for the network device are not limited in embodiments of this application.

The network device may be fixed or mobile. For example, base stations 110a and 110b (examples for the network device) are stationary and are responsible for wireless transmission and reception in one or more cells from the communication device 120. A helicopter or uncrewed aerial vehicle 120i shown in FIG. 1 may be configured to serve as a mobile base station, and one or more cells may move based on a location of the mobile base station 120i. In other examples, the helicopter or uncrewed aerial vehicle (120i) may be configured to serve as a communication device communicating with the base station 110b.

In this application, for example, a communication apparatus configured to implement the foregoing network functions may be an access network device, may be a network device having some functions of an access network, or may be an apparatus that can support implementation of the functions of the access network, for example, a chip system, a hardware circuit, a software module, or a combination of a hardware circuit and a software module. The apparatus may be installed in the access network device or used together with the access network device.

The communication device may be an entity like a mobile phone configured to receive or transmit a signal on a user side. The communication device may be configured to connect a person, an object, and a machine. The communication device may communicate with one or more core networks via the network device. The communication device includes a handheld device having a wireless connection function, another processing device connected to a wireless modem, a vehicle-mounted device, or the like. The communication device may be a portable, pocket-sized, handheld, computer built-in, or vehicle-mounted mobile apparatus. The communication device 120 may be widely used in various scenarios, for example, cellular communication, device-to-device D2D, vehicle-to-everything V2X, peer-to-peer P2P, machine-to-machine M2M, machine type communication MTC, internet of things IoT, virtual reality VR, augmented reality AR, industrial control, self driving, telemedicine, a smart grid, smart furniture, smart office, smart wearable, smart transportation, a smart city, an uncrewed aerial vehicle, a robot, remote sensing, passive sensing, positioning, navigation and tracking, and autonomous delivery and mobility. Some examples of the communication device 120 are 3GPP user equipment (UE), a fixed device, a mobile device, a handheld device, a wearable device, a cellular phone, a smartphone, a session initiation protocol (SIP) phone, a notebook computer, a personal computer, a smart book, a vehicle, a satellite, a global positioning system (GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in the smart grid (smart grid), a wireless terminal in transportation safety (transportation safety), a wireless terminal like a smart fueler in the smart city (smart city), a terminal device on a high-speed railway, and a wireless terminal like a smart speaker, a smart coffee machine, and a smart printer in a smart home (smart home). The communication device 120 may be a wireless device in the foregoing various scenarios or an apparatus disposed in a wireless device, for example, a communication module, a modem, or a chip in the foregoing device. The communication device may also be referred to as a terminal, a terminal device, user equipment (user equipment, UE), a mobile station (mobile station, MS), or a mobile terminal (mobile terminal, MT). The communication device may alternatively be a communication device in a future wireless communication system. The communication device may be used in a dedicated network device or a general-purpose device. A specific technology and a specific device form used by the communication device are not limited in embodiments of this application.

Optionally, the communication device may be configured to serve as a base station. For example, the UE may serve as a scheduling entity that provides sidelink signals between UEs in V2X, D2D, P2P, or the like. As shown in FIG. 1, a cellular phone 120a and a car 120b communicate with each other by using sidelink signals. The cellular phone 120a communicates with a smart home device 120e without relaying a communication signal via the base station 110b.

In this application, a communication apparatus configured to implement functions of the communication device may be a terminal device, may be a terminal device having some functions of the communication device, or may be an apparatus that can support implementation of the functions of the communication device, for example, a chip system. The apparatus may be installed in the terminal device or used together with the terminal device. In this application, the chip system may include a chip, or may include a chip and another discrete component.

Optionally, the wireless communication system usually includes a cell, the base station provides cell management, and the base station provides a communication service for a plurality of mobile stations (mobile stations, MSs) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components in a same rack. Optionally, one cell may correspond to one carrier or component carrier.

It should be understood that a quantity and a type of each device in the communication system shown in FIG. 1 are merely used as an example, and this application is not limited thereto. During actual application, the communication system may further include more terminal devices and more network devices, and may further include another network element, for example, may include a core network device and/or a network element configured to implement an artificial intelligence function.

For ease of understanding the technical solutions provided in this application, the following first briefly describes professional terms in this application. It may be understood that the description is not intended to limit this application.

1. Artificial intelligence (Artificial Intelligence, AI) technology

(1) AI model

The AI model is a specific implementation of an AI technology function. The AI model indicates a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

Based on different specific methods and/or technologies for implementing artificial intelligence, the AI model may also be specifically referred to as a machine learning model, a deep learning model, or a reinforcement learning model. Machine learning is a method for implementing artificial intelligence. An objective of the method is to design and analyze some algorithms (namely, "models") through which a computer can automatically "learn". The designed algorithms are referred to as "machine learning models". The machine learning models are a type of algorithms that obtain a rule by automatically analyzing data and predict unknown data according to the rule. There are various machine learning models. The machine learning models are classified into supervised learning models and unsupervised learning models based on whether model training depends on labels corresponding to training data. The following mainly describes the "supervised learning model".

(2) Supervised learning model

The "supervised learning model" is a model obtained after a parameter of an initial AI model is determined based on data in a given training dataset and a label corresponding to each piece of data in the training dataset. A process of determining the parameter of the initial AI model based on the data in the training dataset and the label corresponding to the data is also referred to as "supervised learning" (or "supervised training"). A label of data in a training dataset is usually manually annotated to identify a correct answer to the data in a specific task. Typical supervised learning models include: a support vector machine, a neural network model, a logistic regression model, a decision tree, a Naive Bayesian model, a Gaussian discriminative model, and the like. The supervised learning model is usually used for classification or regression. Quantitative output is referred to as "regression", and may also be understood as "continuous variable prediction" of the AI model. Qualitative output is referred to as "classification", and may also be understood as "discrete variable prediction" of the AI model.

(3) Deep neural network (deep neural network, DNN)

The DNN is a specific implementation form of machine learning. According to the general approximation theorem, a neural network can approximate any continuous function in theory, so that the neural network has a capability of learning any mapping. In a conventional communication system, a communication module needs to be designed with rich expert knowledge. However, a DNN-based deep learning communication system can automatically discover an implicit pattern structure from a large quantity of datasets, establish a mapping relationship between data, and obtain performance better than that of a conventional modeling method.

An idea of the DNN comes from a neuron structure of a brain tissue. Each neuron performs a weighted summation operation on input values of the neuron, and outputs a weighted summation result through a nonlinear function, as shown in FIG. 2. Specifically, it is assumed that an input of the neuron is $x = [x_0, \ldots, x_n]$, a weight corresponding to the input is $d = [d_0, \ldots, d_n]$, and a weighted summation bias is b. The nonlinear function may be in diversified forms. For example, if the nonlinear function is $\max\{0, x\}$, an execution effect of the neuron may be $\max\{0, \sum_{i=0}^{n} d_i x_i + \mathrm{b}\}$. In this case, the

weight d = [$d_0$, ... , $d_n$] and the bias b may be understood as parameters of the model.

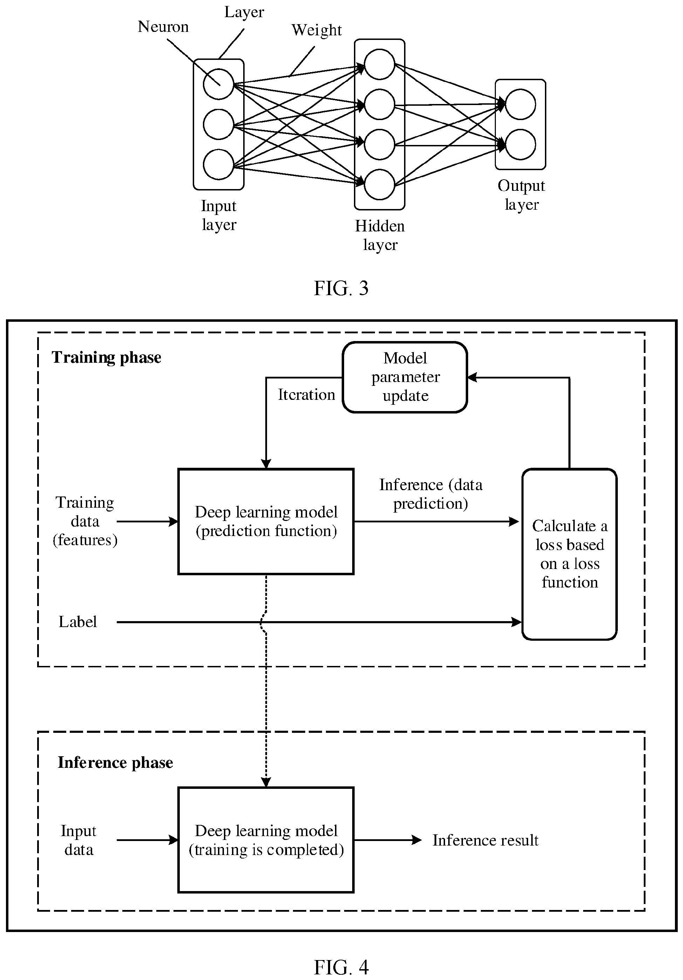

The DNN usually has a multi-layer structure. Each layer of the DNN may include a plurality of neurons. An input layer processes a received value by using a neuron, and then transfers a processed value to an intermediate hidden layer. Similarly, the hidden layer transfers a calculation result to a last output layer, to generate a last output of the DNN, as shown in FIG. 3. The DNN usually has more than one hidden layer, and the hidden layer usually directly affects an information extraction capability and a function fitting capability. Increasing a quantity of hidden layers of the DNN or increasing a width of each layer can improve the function fitting capability of the DNN. A weight in each neuron is a parameter of a DNN model. The model parameter is optimized in a training process, so that the DNN has a data feature extraction capability and a mapping relationship expression capability.

(4) AI model training and inference

Any AI model needs to be trained before being used to resolve a specific technical problem. As shown in FIG. 4, AI model training is a process of calculating training data by using a specified initial model, and adjusting a parameter in the initial model by using a specific method based on a calculation result, so that the model gradually learns a specific rule and has a specific function. After training, an AI model with a stable function can be used for inference. AI model inference is a process of calculating input data by using a trained AI model to obtain a predicted inference result.

In a training phase, a training set for a deep learning model first needs to be constructed based on an objective. The training set includes a plurality of pieces of training data, and a label is set for each piece of training data. The label of the training data is a correct answer of the training data to a specific question, and the label may represent an objective of training the deep learning model by using the training data.

When the deep learning model is trained, the training data may be input in batches into a deep learning model obtained after parameter initialization, and the deep learning model performs calculation (namely, "inference") on the training data to obtain a prediction result for the training data. The prediction result obtained through inference and the label corresponding to the training data are used as data for calculating a loss based on a loss (loss) function. A loss function is a function used to calculate, in a model training phase, a difference (namely a loss value) between a prediction result of a model for training data and a label of the training data. The loss function may be implemented by using different mathematical functions. Common expressions of the loss function include a mean square error loss function, a logarithmic loss function, a least square method, and the like. Model training is a process of repeated iterations. In each iteration, different training data is inferred and a loss value is calculated. An objective of a plurality of iterations is to continuously update parameters of the deep learning model and find a parameter configuration that minimizes or gradually stabilizes the loss value of the loss function.

(5) Training dataset and inference data

The "training dataset" is used for training an AI model. The training dataset may include an input of the AI model, or include an input and a target output of the AI model. The training dataset includes one or more pieces of training data. The training data may be a training sample input into the AI model, or may be the target output of the AI model. The target output may also be referred to as a "label" or a "label sample". The training dataset is one of important parts of machine learning. In essence, model training is to learn some features from the training data, so that an output of the AI model is as close as possible to the target output, for example, a difference between the output of the AI model and the target output is minimized. Composition and selection of the training dataset can determine performance of a trained AI model to some extent. The performance of the model may be measured by, for example, a "loss value" or "inference accuracy".

In addition, a loss function may be defined in a training process of the AI model (for example, a neural network). The loss function describes a gap or difference between an output value of the AI model and a target output value. A specific form of the loss function is not limited in this application. The training process of the AI model is a process in which a model parameter of the AI model is adjusted, so that a value of the loss function is less than a threshold, or a value of the loss function meets a target requirement. For example, the AI model is a neural network, and adjusting a model parameter of the neural network includes adjusting at least one of the following parameters: a quantity of layers and a width of the neural network, a weight of a neuron, or a parameter in an activation function of a neuron.

"Inference data" may be used as an input of a trained AI model for AI model inference. During model inference, the inference data is input into an AI model, to obtain a corresponding output, namely, an inference result.

2. Beam management

(1) Beam

In this application, the "beam" may also be understood as a "spatial filtering parameter", a "spatial filter (spatial filter)", or a "spatial parameter (spatial parameter)". A beam for transmitting a signal may usually be referred to as a transmit beam (transmit beam, Tx beam), or may be referred to as a spatial domain transmit filter (spatial domain transmit filter) or a spatial domain transmit parameter (spatial domain transmit parameter). A beam for receiving a signal may be referred to as a receive beam (receive beam, Rx beam), or may be referred to as a spatial domain receive filter (spatial domain receive filter) or a spatial domain receive parameter (spatial domain receive parameter).

In the new radio (new radio, NR) protocol, the beam may be, for example, the spatial filtering parameter (for example, the spatial receive filtering parameter or the spatial transmit filtering parameter). However, it should be understood that this application does not exclude a possibility of defining another term in a future protocol to represent a same or similar meaning.

(2) Beam sweeping

The "beam sweeping" means that in a specific periodicity or time period, a beam is transmitted in a predefined direction at a fixed periodicity, to cover a specific spatial area. For example, during initial access, UE needs to synchronize with a system and receive minimum system information. Therefore, a bearer synchronization signal and physical broadcast channel (physical broadcast channel, PBCH) block (synchronization signal and PBCH block, SSB) is used to perform sweeping and sending at a fixed periodicity. A channel state information-reference signal (channel state information-reference signal, CSI-RS) may also use the beam sweeping technology. However, if all predefined beam directions need to be covered, overheads of the CSI-RS are excessively high. In this case, the CSI-RS is transmitted only in a specific subset of the predefined beam directions based on a location of a served terminal device.

(3) Beam measurement

The "Beam measurement" is a process in which a network device or a terminal device measures quality and a characteristic of a received beamformed signal. In a beam management process, the terminal device or the network device may obtain information such as reference signal received power (reference signal received power, RSRP), reference signal received quality (reference signal received quality, RSRQ), and a signal to interference plus noise ratio (signal to interference plus noise ratio, SINR) of a reference signal by using an SSB and a CSI-RS, to identify an optimal beam.

(4) Beam determination

A network device or a terminal device selects a transmit beam or a receive beam used by the network device or the terminal device. A downlink beam may be determined by the terminal device. For example, a determining criterion of the downlink beam is that maximum received signal strength of the beam is greater than a specific threshold. In an uplink direction, the terminal device transmits a sounding reference signal (sounding reference signal, SRS) in a direction of the network device, and the network device measures the SRS to determine an optimal uplink beam.

Currently, an AI model may be deployed on a training device (for example, a terminal device) for training and updating. When the training device trains the AI model, to support the training device in training the AI model, a network device consecutively (for example, periodically) transmits training datasets to the training device, and the network device stops sending a training dataset to the training device only after the training device sends model training completion indication information to the network device. However, in a process in which the training device trains the AI model, the training datasets transmitted by the network device to the training device are not needed by the training device, causing a waste of resources. Therefore, how to obtain a training dataset when the training device trains the AI model becomes a technical problem that needs to be resolved.

In view of this, this application provides a model training method. A training device may request a network to send a training dataset, and request information also indicates related information of the training dataset that is sent by a network device to the training device and that is needed by the training device. In other words, in this application, the training device may indicate a needed training dataset to the network device, and the network device may send, to the training device, a training dataset indicated by the training device, and does not need to continuously deliver training datasets. The method can reduce a waste of air interface resources and air interface overheads, and compared with another method, the method improves use performance of the air interface resources.

It should be noted that the "training device" in this application may be understood as, for example, a terminal device. In other words, the terminal device may communicate with the network device, and the terminal device also has a capability of supporting model training. For another example, the "training device" may be understood as a device specially used for model training. For example, the device may provide only a model training function. If the device determines that model training is completed, the device may send a trained model to a required terminal device.

In this application, "model training" is described by using "AI model training" as an example, and it is assumed that an AI model is deployed on the training device.

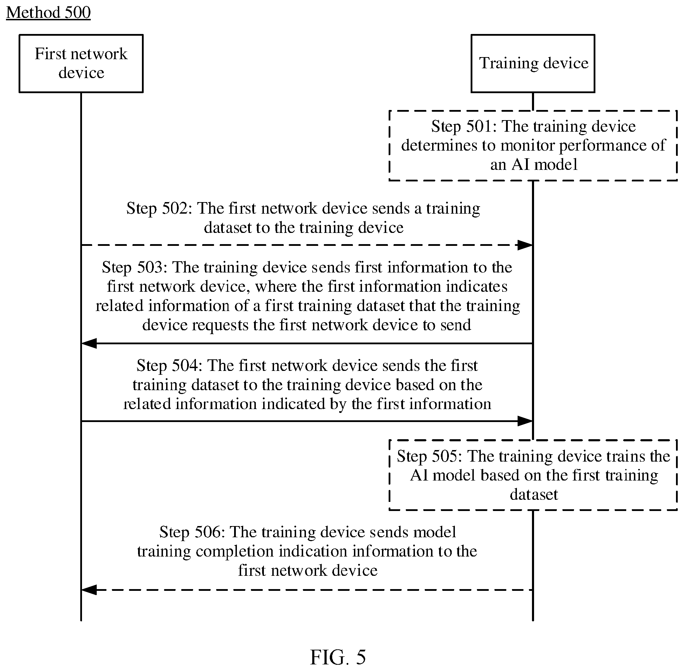

FIG. 5 is a schematic flowchart of a training dataset obtaining method 500 according to this application. The following describes steps shown in FIG. 5. It should be noted that steps represented by dashed lines in FIG. 5 are optional, and details are not described in subsequent descriptions. The method includes the following steps.

Optionally, step 501: A training device determines to monitor performance of an AI model.

For example, the training device is handed over from a second cell to a first cell, where a first network device provides a service for the first cell, and a second network device provides a service for the second cell. In this case, the training device determines to monitor the performance of the AI model, or the first network device indicates the training device to monitor the performance of the AI model.

For another example, the training device finds that input information of the AI model changes. For example, the training device finds that a sparse beam pattern does not belong to beam patterns in a full codebook. In this case, the training device determines to monitor the performance of the AI model.

Optionally, step 502: The first network device sends a training dataset to the training device.

After entering a model monitoring phase, the first network device may configure reference signal resources for the training device, and transmit N groups of reference signals (namely, the training dataset) to the training device. For example, in a beam management scenario, the training device may obtain the input information and a label of the AI model through full codebook sweeping (which may also be understood as full beam sweeping).

Specifically, in a possible implementation, the first network device sends the N groups of reference signals to the training device, and the training device may measure the N groups of reference signals to obtain corresponding N groups of measurement results. For example, each of the N groups of measurement results includes RSRP of a reference signal, and then the training device may determine any one of the N groups of measurement results as the input information of the AI model, or the training device may use the N groups of measurement results as the input information of the AI model. In another possible implementation, the first network device may indicate, to the training device, measurement results corresponding to M groups of reference signals in the N groups of reference signals as the input information of the AI model (for details, refer to descriptions in a method 700). Based on a configuration of the AI model, for example, the training device may use several largest RSRP values in RSRP values of RSRPs of all reference signals in the N groups of measurement results as a label of the AI model during training. Then, the training device may obtain output information (namely, an inference result of the AI model) of the AI model by using the input information, and compare the output information with the label. For example, model prediction performance may be measured by using a training loss or training accuracy. For example, a threshold may be set. If the training loss (or accuracy) is greater than or equal to the threshold, it indicates that the AI model meets a requirement of a new cell or a requirement of new input information. In other words, the AI model may continue to be used. If the training loss (or accuracy) is less than the threshold, the training device may determine that the AI model is not suitable for the requirement of the new cell or the requirement of the new input information. In this case, the training device determines that the AI model needs to be updated. In this embodiment, it is assumed that the training device determines that the AI model needs to be updated, and then steps 503 to 506 need to be performed.

Step 503: The training device sends first information to the first network device, where the first information indicates related information of a first training dataset that the training device requests the first network device to send.

Correspondingly, the first network device receives the first information from the training device.

In this application, the related information of the first training dataset may include, for example, at least one of the following: information about a size of the first training dataset, configuration information of an input of the AI model, or configuration information of a reference signal used for training the AI model.

In this application, for example, the training device may determine the "information about a size of the first training dataset" in the following manners.

In a possible implementation, the information about the size of the first training dataset may be determined by the training device based on a size of a training dataset needed for completing training of the AI model. For example, the information about the size of the first training dataset may be determined by the training device based on the size of the training dataset needed for completing training of the AI model. For example, the training device may determine, by using historical information, a total quantity of training datasets required when the AI model is trained from an initial state of the AI model (for example, the initial state of the AI model is 0) to a converged state. For example, the training device determines, based on historical experience, that the full codebook needs to be swept for totally 60,000 times to obtain training datasets for training the AI model.

In another possible implementation, before step 501, the method further includes: The training device determines first performance of the AI model; and the training device determines the information about the size of the first training dataset based on the first performance of the AI model and second performance of the AI model, where the first performance is current performance of the AI model, and the second performance is target performance of the AI model. For example, when monitoring the AI model, the training device compares the current performance of the AI model obtained through monitoring with model performance that is in the historical information and that corresponds to the AI model in the converged state, and may estimate, based on the current performance of the AI model, the size of the first training dataset required for achieving expected model performance.

It should be noted that, in this application, the performance of the AI model may be determined by measuring information such as the "training loss" and the "training accuracy". For example, the "training loss" may be compared with a threshold, and the performance of the AI model during training may be measured by using a comparison result.

In this application, the training device may indicate a size of a training dataset needed by the first network device, so that the first network device delivers the training dataset based on an indication of the training device. This can prevent the first network device from continuously transmitting data to the training device in a model training process of the training device, thereby reducing a waste of air interface resources and improving use performance of the air interface resources.

In this application, the "configuration information of a reference signal" may include, for example, at least one of the following: an identifier of the reference signal, a time domain resource of the reference signal, a frequency domain resource of the reference signal, a transmission periodicity of the reference signal, or a type of the transmitted reference signal. For example, the type of the reference signal is an SSB, a CSI-RS, or an SRS. The identifier of the reference signal may also be understood as an identifier of a group of reference signals. For example, the configuration information of the reference signal includes group identifiers of the N (N is an integer greater than or equal to 1) groups of reference signals, where each group of reference signals in the N groups of reference signals has a same group identifier, and each group of reference signals includes at least one reference signal. Similarly, the time domain resource of the reference signal, the frequency domain resource of the reference signal, the transmission periodicity of the reference signal, and the type of the transmitted reference signal may also be understood as time domain resources of the N groups of reference signals, frequency domain resources of the N groups of reference signals, transmission periodicities of the N groups of reference signals, and types of the N groups of transmitted reference signals.

The "resource" in this application may be a frequency domain resource, a time domain resource, a resource block (resource block, RB), a physical resource block (physical resource block, PRB), or the like. This is not limited in this application.

In this application, the training device may determine the configuration information of the reference signal by using historical information about AI model training, and indicate the configuration information to the first network device, so that the network device may configure the reference signal for the training device. The training device obtains the input information and the label of the AI model by measuring the configured reference signal, to continue to train the AI model. Further, in this embodiment, in a plurality of iterative training processes of the AI model, the first network device may also indicate the input information of the AI model, to accelerate convergence of the AI model. For a specific implementation, refer to the following method 700. In other words, the method 500 may also be combined with the method 700.

In this application, the "configuration information of an input of the AI model" may be understood as, for example, that the training device determines the input information of the AI model based on the historical information about AI model training. For example, the input information of the AI model is a measurement result of a reference signal corresponding to the sparse beam pattern. In this case, the training device may determine that the sparse beam pattern includes a beam at a specific location in the full codebook. For example, the training device may report, to the first network device, information such as an identifier of the sparse beam pattern, an identifier of the reference signal corresponding to the sparse beam pattern, or the measurement result of the reference signal, so that the first network device can deliver a training dataset corresponding to the beam pattern.

In this application, that "the first information indicates related information of the first training dataset that the training device requests the first network device to send" may be specifically implemented in the following implementations. In a possible implementation, the first information may explicitly indicate the related information of the first training dataset that the training device requests the first network device to send. For example, the first information may include the information about the size of the first training dataset, the configuration information of the input of the AI model, and the configuration information of the reference signal used for training the AI model. Specifically, it is assumed that the training device needs to sweep the full codebook for 60,000 times to determine the size of the first training dataset. In this case, the first information may include information indicating a specific value of a quantity of sweeping times. In another possible implementation, the first information may implicitly indicate the related information of the first training dataset that the training device requests the first network device to send. For example, the first information may indicate the size of the first training dataset by including an index, and the first network device may determine, by querying the index, a specific value corresponding to the index. Other related information that is of the first training dataset and that is indicated by the first information may also be understood similarly, and is not illustrated one by one.

Optionally, in this application, the first information further includes at least one of the following: identification information of the AI model, information about an application scenario of the AI model, usage information of the AI model, and information about a computing capability of the training device.

For example, the network device may store a first mapping relationship. The first mapping relationship is a correspondence between an identifier of each AI model and a size of a training dataset corresponding to the identifier of the AI model. For example, the first mapping relationship may be in a form of a table. As shown in Table 1, AI model #1 corresponds to training dataset #A, AI model #2 corresponds to training dataset #B, and AI model #3 corresponds to training dataset #C. The training device may indicate the size of the required training dataset by sending the identifier of the AI model.

For another example, the application scenario of the AI model or the usage of the AI model may be understood as that the AI model is used in the beam management scenario, the CSI feedback scenario, the positioning scenario, or the like. The training device may indicate, by indicating, to the first network device, the application scenario or the usage of the AI model, the size of the training dataset required for training the AI model.

For another example, the training device may report the information about the computing capability to the first network device. In this application, the information about the computing capability reported by the training device includes at least one of the following: a capability of a processor (for example, a central processing unit (central processing unit, CPU), a graphics processing unit (graphics processing unit, GPU), a tensor processor (tensor processing unit, TPU), a neural network processing unit (neural network processing unit, NPU), a field-programmable gate array (field-programmable gate array, FPGA), or the like) of the training device, a size of storage space of the training device, a size of a memory of the training device, a battery level of the training device, and the like. This is not limited. The training device may indicate, by reporting, to the network device, the computing capability of the training device, a maximum quantity of training datasets that can be processed during training of the AI model. For example, the training device may sweep the full codebook for a maximum of 40,000 times. In this case, a size of a training dataset sent by the first network device to the training device does not exceed the computing capability of the training device.

Table 1

| Identifier of an AI model | Training dataset |
|---|---|
| AI model #1 | Training dataset #A |
| AI model #2 | Training dataset #B |
| AI model #3 | Training dataset #C |
| ... | ... |

Step 504: The first network device sends the first training dataset to the training device based on the related information indicated by the first information.

Correspondingly, the training device receives the first training dataset from the first network device.

In this application, the first training dataset is a training dataset based on the related information of the first training dataset indicated by the first information, and the first training dataset is used for training the AI model. In other words, the first training dataset is determined based on the related information of the first training data indicated by the first information.

Optionally, in this application, the first network device may further obtain third information from the second network device. The third information is related information for training the AI model on the second network device. For example, the third information includes at least one of the following: information about a size of a training dataset that the training device requests the second network device to send, information about the size of the training dataset needed for completing training of the AI model, the identification information of the AI model, or the information about the computing capability of the training device. Optionally, the third information further includes information about duration of sending the training dataset by the second network device and/or information about a manner of sending the training dataset by the second network device. Specifically, the first network device may send the first training dataset to the training device based on the related information indicated by the first information, and the third information. For a specific implementation, refer to the following descriptions of a method 600.

Optionally, step 505: The training device trains the AI model based on the first training dataset.

For example, after receiving the first training dataset, the training device may determine the input information and the label. In a possible implementation, the first training dataset is the N groups of reference signals, and the terminal device may measure the N groups of reference signals to obtain corresponding N groups of measurement results. For example, each of the N groups of measurement results includes RSRP of a reference signal, and then the training device may determine any one of the N groups of measurement results as the input information of the AI model. In another possible implementation, the network device may indicate, to the terminal device, measurement results corresponding to M groups of reference signals in the N groups of reference signals as the input information of the AI model (for details, refer to the descriptions in the method 700). Based on the configuration of the AI model, for example, the training device may use RSRP measurement results of all reference signals in the N groups of measurement results as the label of the AI model. Then, the training device may obtain the output information of the AI model by using the input information, and compare the output information with the label to obtain the training loss of the AI model. The foregoing process may be understood as one training of the AI model. The training device may measure the performance of the AI model based on the training loss and the training accuracy of the current model training, and determine a training dataset required for next model training. For example, a size of the training dataset may be determined by the training device based on a model performance evaluation result. For example, if the training device determines that model performance is significantly improved after a first round of training of the AI model, a data amount of the training dataset may be reduced. Specifically, the following steps are further included.

The training device may train the AI model based on the first training dataset, and determine the performance of the AI model. The training device may send second information to the network device based on the performance of the AI model, where the second information indicates related information of a second training dataset that the training device requests the network device to send. The training device receives the second training dataset from the network device, where the second training dataset is a training dataset based on the related information indicated by the second information, and the second training dataset is used for training the AI model. For example, a data amount of the second training dataset may be less than a data amount of the first training dataset. Subsequently, the training device may still train the AI based on the second training dataset, and perform iterations repeatedly. For example, the training device performs model training based on the second training dataset, re-determines performance of the AI model, and determines a size of a required third training dataset based on the performance of the AI model. It is assumed that the training device may perform training for L (L is an integer greater than 1) times until the training device determines that the AI model is converged (the "model is converged" may also be understood as that the AI model reaches target performance).

Optionally, step 506: The training device sends model training completion indication information to the first network device.

After completing training of the AI model, the training device may enter a model inference phase.

Based on the foregoing technical solution, in this application, the training device may indicate, to the network, the related information of the required training dataset, so that the network device may send the training dataset to the training device based on the indication, and does not need to continuously deliver training datasets. The method can reduce a waste of air interface resources and air interface overheads, and improve use performance of the air interface resources.

The method 500 mainly describes that the training device determines the related information of the required training dataset, so that the network device can deliver the training dataset based on a request of the training device. This can reduce a waste of the air interface resources and improve use performance of the air interface resources. The following method 600 mainly describes that if the training device performs cell handover, a new network device after the handover may obtain, from a former network device before the handover, related information for training the AI model, and determine, based on the information, a training dataset that needs to be sent to the training device.

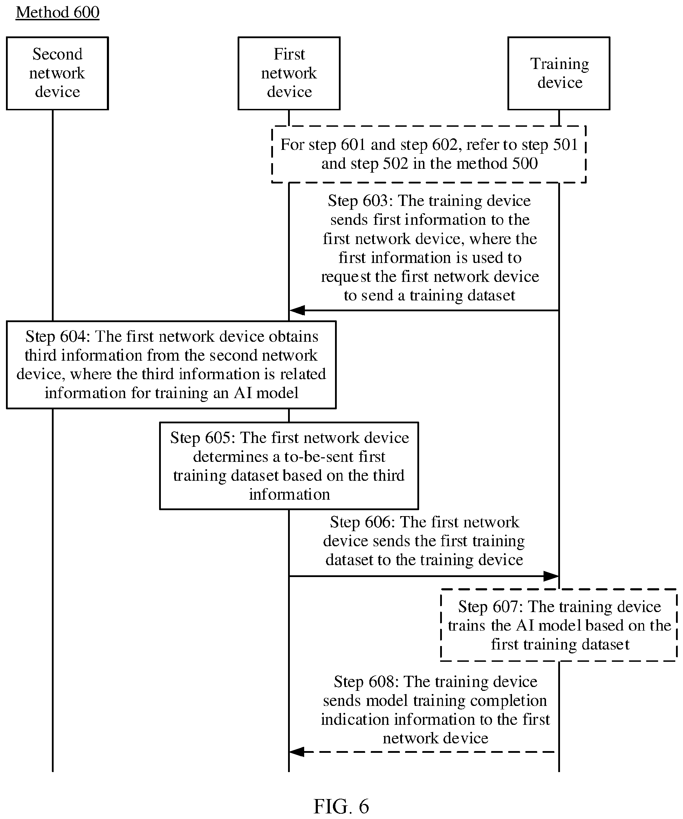

FIG. 6 is a schematic flowchart of a training dataset obtaining method 600 according to this application. In the method 600, it is considered that if a training device performs cell handover, the training device determines that model monitoring needs to be performed. It is assumed that the training device determines, through model monitoring, that model update needs to be performed on an AI model. The method 600 includes the following steps.

Optionally, in step 601 and step 602, the training device determines to monitor performance of the AI model. In this embodiment, it is still assumed that the training device determines that the AI model needs to be updated, and step 603 to step 608 need to be performed. Specifically, for an implementation of step 601 and step 602, refer to step 501 and step 502 in the method 500. Details are not described again.

Step 603: The training device sends first information to a first network device, where the first information is used to request the first network device to send a training dataset.

For example, if the training device determines, by monitoring performance of the AI model, that the AI model needs to be updated, the training device may send the first information to the first network device.

Step 604: The first network device obtains third information from a second network device, where the third information is related information for training the AI model.

In a possible implementation, the first network device may send request information to the second network device, where the request information is used to request to obtain information for training the AI model, and the second network device may synchronize, based on the request information, the related information for training the AI model to the first network device. In another possible implementation, the second network device may actively provide, for the first network device, the related information for training the AI model.

For example, the third information may include at least one of the following: information about a size of a training dataset that the training device requests the second network device to send, information about the size of the training dataset needed for completing training of the AI model, identification information of the AI model, or information about a computing capability of the training device.

The "information about a size of a training dataset that the training device requests the second network device to send" may be understood as: When the second network device is connected to the training device, the training device requests the information about the size of the required training dataset from the second network device. For example, the training device may also determine, based on historical information, the size of the training dataset requested from the second network device. The "information about the size of the training dataset needed for completing training of the AI model" may be understood as that the second network device stores a total size of a training dataset required for training the AI model by the training device. For example, network devices (for example, the first network device and the second network device) may jointly maintain a first mapping relationship. The first mapping relationship is a mapping relationship between an identifier of an AI model and a size of a training dataset corresponding to the identifier of the AI model. For example, the first mapping relationship may be in a form of a table, as shown in Table 1. In other words, a quantity of training data needed for completing one AI model training in a current cell for each AI model is collected based on historical experience. In other words, information in Table 1 may be synchronized between the network devices. For example, Table 1 is stored on both the first network device and the second network device. If the identifier of the AI model does not exist in Table 1, the first network device may determine, based on a size of a training dataset delivered by the second network device to the training device, a size of the training dataset during current model training. It should be noted that some AI models may not adapt to an environment of the current cell at all. The first network device may indicate that the AI model cannot be trained, and advise the training device to replace the AI model. Alternatively, the second network device may synchronize the information about the computing capability of the training device to the first network device, so that the first network determines a size of a training dataset that should be sent to the training device.

It should be noted that the "mapping relationship" in this application may also be expressed as an "association relationship" or a "correspondence". It should be understood that the "mapping relationship" in embodiments of this application may be stored or recorded by using a function relationship, a table, a mapping relationship, or the like. In the following embodiments, the "mapping relationship" may be configured by the network device, or may be predefined in a protocol, or the like. This is not limited.

Optionally, the third information further includes information about duration of sending the training dataset by the second network device and/or information about a manner of sending the training dataset by the second network device. The "information about duration of sending the training dataset by the second network device" may also be understood as time for training the AI model when the training device is connected to the second network device. In other words, the time required for training the AI model until the convergence is complete.

The "information about a manner of sending the training dataset by the second network device" may also be understood as, for example, the second network device periodically sends the training dataset to the training device. For example, the network device may identify a time period in which a data request quantity is the smallest in a day, which may alternatively be understood as a time period in which the smallest air interface resources are occupied or a time period in which air interface resources are sufficient. In this case, the training dataset may be provided for the AI model. For example, the network device may select the time period every day to support update of the AI model (herein, a quantity of training devices and/or a quantity of AI models are not limited). For another example, the second network device sends the training dataset to the training device at intervals. Compared with periodic sending, this solution has some improvement in flexibility. If the network device finds and/or determines that a current data request quantity is relatively small and air interface resources are sufficient, the network device determines that the network device can support update of the AI model. In other words, in this implementation, the network device may determine, based on an air interface resource occupation status at a current moment, to send the training dataset to the training device. Therefore, this implementation does not have an obvious periodic feature.

The first network device may determine, based on the information, whether the first network device has a capability of supporting training of the AI model, and the first network may also determine, based on the information (for example, the information about the computing capability of the training device), whether the training device has the capability of supporting training of the AI model. For example, for some AI models, the first network device determines, based on historical information, that the training device cannot train the AI model to a converged state. In this case, it may be understood that the training device does not support training of the AI model. For another example, the first network device determines, based on the information synchronized by the second network device, that air interface resources for delivering the training dataset to the training device are insufficient. In this case, it may be understood that the first network device does not support training of the AI model.

It should be noted that, in this application, there is no limitation on a sequence between step 603 and step 604. For example, step 603 and step 604 may alternatively be simultaneously performed.

Step 605: The first network device determines a to-be-sent first training dataset based on the third information.

As described in step 604, the first network device obtains, from the second network device, the related information for training the AI model by the training device, and determines a size of the first training dataset delivered by the training device. Further, the first network device may simultaneously provide services for a plurality of training devices or terminal devices. For example, the first network device may need to deliver a training dataset to another training device, and the first network device may further need to transmit control information to a plurality of terminal devices. In this case, an air interface resource of the first network device is very insufficient. Therefore, the first network needs to comprehensively determine, based on a current usage status of the air interface resource, the size of the training dataset delivered to the training device. For example, the first network device determines, based on the third information, that the training dataset that needs to be sent to the training device is training dataset #A. However, because the first network device does not have sufficient time-frequency resources to transmit training dataset #A, the first network device may determine to transmit only a part of the training dataset.

In this application, the "resource usage status" may also be understood as the "resource occupation status", "air interface resource occupation", or the like. For example, an existing protocol framework has defined a maximum quantity of reference signals (for example, 64 CSI-RSs) that can be configured by the network device. If the network device finds that all reference signals have been configured for another function, the network device may determine that a current resource is occupied, and cannot configure a reference signal resource for the training device to support update of the AI model.

Optionally, the first information indicates the related information of the first training dataset that the training device requests the first network device to send. For example, the first information may include at least one of the following: information about a size of a requested training dataset, configuration information of an input of the AI model, configuration information of a reference signal used for training the AI model, and identification information of the AI model. Optionally, the first information further includes at least one of the following: the identification information of the AI model, information about an application scenario of the AI model, usage information of the AI model, or information about a computing capability of the training device. In other words, this embodiment may be further combined with the method 500. To be specific, the training device may indicate, to the network device, the size of the requested first training dataset. In this case, the first network device may comprehensively determine, based on the third information, the first information, and the usage status of the air interface resource, the size of the training dataset that can be sent to the training device.

Step 606: The first network device sends the first training dataset to the training device.

Correspondingly, the training device receives the first training dataset from the first network device.

In this application, the first training dataset is used for training the AI model.

Step 607: The training device trains the AI model based on the first training dataset.

Specifically, for a process in which the training device trains the AI model based on the first training data in this embodiment, refer to step 505 in the method 500. Details are not described again.

Optionally, in step 608, the training device sends model training completion indication information to the network device.

After completing training of the AI model, the training device may enter a model inference phase.

In this embodiment, the network device may comprehensively determine, in combination with various information, whether to support training of the AI model, and the network device does not continuously deliver the training dataset to the training device, so that unnecessary air interface resource occupation can be reduced, air interface overheads can be reduced, and use performance of air interface resources can be improved.

In the method 500 and the method 600, the training dataset obtaining method is described from the perspective of the training device and from the perspective of the network device, respectively.

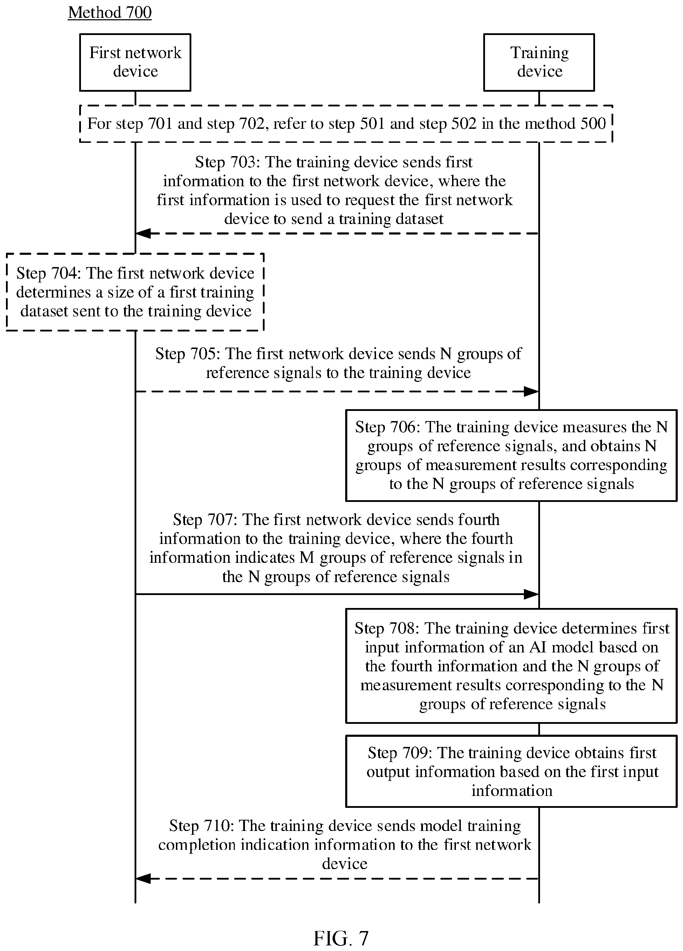

In this application, a problem of how to specifically train an AI model during model training is further considered. In a possible solution, the network device sends the training dataset to the training device, and the training device obtains the input information and the label based on the training dataset sent by the network device. In this solution, during model training, all training datasets are input into the AI model for training. This model training method needs a long training time to make the model converge. The following method 700 further considers how the AI model can be quickly converged specifically during training of the AI model. FIG. 7 is a schematic flowchart of a method 700 for obtaining input information of an AI model according to this application. The method 700 includes the following steps.

Optionally, in step 701 and step 702, a training device determines to monitor performance of the AI model. In this embodiment, it is still assumed that the training device determines that the AI model needs to be updated, and step 703 to step 710 need to be performed. Specifically, for an implementation of step 701 and step 702, refer to step 501 and step 502 in the method 500. Details are not described again.

Optionally, step 703: The training device sends first information to a first network device, where the first information is used to request the first network device to send a training dataset.

Correspondingly, the first network device receives the first information from the training device.

Optionally, the first information indicates related information of a first training dataset that the training device requests the first network device to send. For example, the first information may include at least one of the following: information about a size of a requested training dataset, configuration information of an input of the AI model, configuration information of a reference signal used for training the AI model, and identification information of the AI model. Optionally, the first information further includes at least one of the following: the identification information of the AI model, information about an application scenario of the AI model, usage information of the AI model, or information about a computing capability of the training device. In other words, this embodiment may be further combined with the method 500. To be specific, the training device may indicate, to the network device, the size of the requested training dataset.

Optionally, step 704: The first network device determines a size of the first training dataset sent to the training device.

For example, after receiving the first information from the training device, the first network device may obtain third information from a second network device, where the third information is related information for training the AI model. For example, the third information may include at least one of the following: information about a size of a training dataset that the training device requests the second network device to send, information about the size of the training dataset needed for completing training of the AI model, identification information of the AI model, or information about the computing capability of the training device. Optionally, the third information further includes information about duration of sending the training dataset by the second network device and/or information about a manner of sending the training dataset by the second network device. For example, the first network device may determine, based on the third information, the first training dataset to be sent to the training device. For a specific implementation, refer to the descriptions of the method 600. For another example, the first network device may determine, based on the related information indicated by the first information, and the third information, the first training dataset to be sent to the training device. For another example, the first network device may determine, based on the related information indicated by the first information, the third information, and the resource usage of the first network device, the first training dataset to be sent to the training device. In other words, this embodiment may be combined with the method 600. To be specific, the network device may comprehensively determine the size of the first training dataset sent to the training device.

Optionally, step 705: The first network device sends N (N is an integer greater than 1) groups of reference signals to the training device.

Correspondingly, the training device receives the N groups of reference signals from the first network device.

In this embodiment, "the first network device sends N groups of reference signals to the training device" may also be understood as that the first network device sends the first training dataset to the training device. For example, in a beam management scenario, the first network device may configure a reference signal resource for the training device, and send the reference signal resource (for example, the N groups of reference signals) to the training device. Each group of reference signals in the N groups of reference signals includes at least one reference signal, and each group of reference signals has a same group identifier. The group identifier corresponding to each group of reference signals may also be understood as a beam identification number, for example, a beam identifier; or the group identifier corresponding to each group of reference signals may also be understood as a resource identifier of each group of reference signals. In other words, the first network device may indicate the training device to perform full codebook beam sweeping. That is, the first network device indicates the training device to measure the N groups of reference signals.

Before step 705, the method may further include: The first network device sends configuration information to the training device, where the configuration information may indicate one or more of the following: time domain resources of the N groups of reference signals, frequency domain resources of the N groups of reference signals, transmission periodicities of the N groups of reference signals, or group identifiers of the N groups of reference signals. For example, in a possible implementation, the configuration information may include a size of the time domain resources of the N groups of reference signals, a size of the frequency domain resources of the N groups of reference signals, information about the transmission periodicities of the N groups of reference signals, and the like. In this case, it may also be understood that the configuration information is explicitly indicated. In another possible implementation, the configuration information may carry an index of the time domain resources of the N groups of reference signals, an index of the frequency domain resources of the N groups of reference signals, an index of the transmission periodicities of the N groups of reference signals, and the like. In this case, it may also be understood that the configuration information is implicitly indicated.

Step 706: The training device measures the N groups of reference signals, and obtains N groups of measurement results corresponding to the N groups of reference signals.

For example, each of the N groups of measurement results may include at least one measurement amount. Specifically, for each reference signal in each group of reference signals, one or more of RSRP, RSRQ, SINR, and the like of the reference signal may be measured. In other words, each group of measurement results may include one or more of RSRP, RSRQ, and SINR measurement results that are measured for each reference signal in the group of reference signals. Each group of measurement results corresponds to a same group identifier. As shown in Table 2, reference signal group #A includes reference signal #A1 and reference signal #A2. The training device may separately measure reference signal #A1 and reference signal #A2. For example, if RSRP and an SINR of reference signal #A1 and RSRP and an SINR of reference signal #A2 are measured, a measurement result of reference signal #A1 includes an RSRP measurement result and an SINR measurement result of reference signal #A1, and a measurement result of reference signal #A2 includes an RSRP measurement result and an SINR measurement result of reference signal #A2.

Table 2

| Reference signal group identifier | Reference signal group | Measurement result group identifier corresponding to the reference signal group | Measurement result of the reference signal group |
|---|---|---|---|
| Reference signal group #A | {Reference signal #A1, reference signal #A2} | Measurement result group #A' | {Measurement result of reference signal #A1, measurement result of reference signal #A2} |
| Reference signal group #B | {Reference signal #B1, reference signal #B2} | Measurement result group #B' | {Measurement result of reference signal #B1, measurement result of reference signal #B2} |
| Reference signal group #C | {Reference signal #C1, reference signal #C2} | Measurement result group #C' | {Measurement result of reference signal #C1, measurement result of reference signal #C2} |

In this embodiment, the training device may determine a training label based on a full codebook beam sweeping result. Specifically, if the AI model is trained by using a regression method, the training device may determine, for example, RSRP measurement results of the N groups of reference signals as the training labels; or if the AI model is trained by using a classification method, the training device may determine, for example, beam identifiers corresponding to K groups of measurement results with best channel quality in the N groups of reference signals as the training labels.

Step 707: The first network device sends fourth information to the training device, where the fourth information indicates M groups of reference signals in the N groups of reference signals.

For example, in a beam management scenario, the fourth information may indicate a sparse beam pattern. It may also be understood that in this embodiment, the first network device may indicate the input information of the AI model to the training device. For example, the first network device may indicate, to the training device, that the input information of the AI model specifically is a beam pattern that includes specific beams in the full codebook. It is assumed that there are 64 beams in the full codebook, the fourth information may indicate that the input information is a pattern that includes specific beams in the 64 beams. Specifically, there may be the following two implementations:

Implementation 1

In a possible implementation, a beam identifier (the "beam identifier" may also be understood as the "group identifier of the reference signal group") in the sparse beam pattern is consistent with an identifier of a beam in the full codebook. For example, there are 64 beams in the full codebook, and identifiers of the beams are respectively beam #1 to beam #64. However, the sparse beam pattern sent by the first network device includes 16 beams: beam #16 to beam #32. For example, in Implementation 1, a beam identifier and a reference signal group identifier are in a one-to-one correspondence. The network device may indicate the sparse beam pattern by indicating the beam identifier (an example of beam information) and/or the reference signal group identifier to the training device.

Implementation 2

In another possible implementation, it is assumed that a beam identifier in the sparse beam pattern is inconsistent with an identifier of a beam in the full codebook. It may also be understood that the beam identifier in the sparse beam pattern does not correspond to the identifier of the beam in the full codebook. For example, there are 64 beams in the full codebook, and the beam identifiers are respectively beam #1 to beam #64. However, the sparse beam pattern sent by the first network device includes 16 beams: beam #1 to beam #16. However, beam #1 to beam #16 in the sparse beam pattern cannot be parsed by the training device as beam #1 to beam #16 in the full codebook. For example, the sparse beam pattern includes 16 beams: beam #1 to beam #16, which actually correspond to beam #1, beam #4, beam #8, beam #12, beam #16, beam #20, beam #24, beam #28, beam #32, beam #36, beam #40, beam #44, beam #48, beam #52, beam #56, and beam #60 in the full codebook. In this case, the sparse beam pattern may be indicated by using the following solution in this scenario. For example, the fourth information includes N fields, the N fields are in one-to-one correspondence with the N groups of reference signals, bit values of M fields in the N fields are different from bit values of remaining (N-M) fields, and the first network device may indicate the M groups of reference signals by using the M fields. For example, the bit values of the M fields are all "1", and the bit values of the remaining (N-M) fields are all "0". In this case, the training device may determine that the input information is measurement results corresponding to specific reference signal groups. Therefore, the network device may specifically indicate, by using fields, that the sparse beam pattern includes specific beams in the full codebook.

In a possible implementation, the first network device may further send fifth information to the training device, where the fifth information indicates P groups of reference signals in the N groups of reference signals. It may also be understood that the first network device may indicate, to the training device, a measurement result of a reference signal corresponding to another beam pattern as the input information of the AI model. In other words, in this application, the first network device may indicate, to the training device, measurement results of reference signals corresponding to a plurality of beam patterns as the input information of the AI model, to perform model training, so that the AI model obtained through training can be converged for all beam patterns.

Optionally, there may be no sequence between step 705 and step 707. For example, the configuration information and the fourth information may also be sent in a same message. This is not limited.

Step 708: The training device determines first input information of the AI model based on the fourth information and the N groups of measurement results corresponding to the N groups of reference signals.

In step 705, the training device has measured the N groups of reference signals and obtained the N groups of measurement results corresponding to the N groups of reference signals. Therefore, the training device may determine, based on the fourth information, specific groups of measurement results in the N groups of measurement results that can be used as the input information of the AI model.

It is assumed that the training device measures 64 groups of reference signals, and the first network device indicates a measurement result corresponding to the second group of reference signals, a measurement result corresponding to the fourth group of reference signals, a measurement result corresponding to the eighth group of reference signals, and a measurement result corresponding to the sixteenth group of reference signals as inputs of the AI model. In this case, the training device may use the measurement result of the second group of reference signals, the measurement result of the fourth group of reference signals, and the measurement result of the eighth group of reference signals as the input information of the AI model. For example, the first input information may be RSRP measurement results of the M groups of reference signals.

Step 709: The training device obtains first output information based on the first input information.

In this embodiment, the "first output information" may also be understood as an inference output result of the AI model. If the AI model is trained by using a regression method, the first input information may be, for example, the RSRP measurement results of the M groups of reference signals. In this case, the first output information may include the N group identifiers corresponding to the RSRP measurement results of the N groups of reference signals. If the AI model is trained by using a classification method, the first input information may be, for example, the measurement results corresponding to the M groups of reference signals. In this case, the first output information may be K group identifiers corresponding to K groups of reference signals with optimal channel quality measurement results in the N groups of reference signals, for example, may be understood as K beam identifiers.

The training device may compare the first output information with the label to obtain the training loss of the AI model. The classification method for model training is used as an example. The first output information is the K group identifiers corresponding to the K groups of reference signals with the optimal channel quality measurement results in the N groups of reference signals that are inferred by the training device. It is assumed that a training label determined by the training device is the K group identifiers corresponding to the K groups of reference signals with the optimal channel quality measurement results in the N groups of reference signals during full codebook sweeping. In this case, the training device may compare an output result with the training label, determine the performance of the AI model, and adjust a model parameter. The foregoing process may be understood as one training of the AI model. The training device may measure the performance of the AI model based on the training loss and the training accuracy of the current model training, and determine a training dataset required for next model training. For example, a size of the training dataset may be determined by the training device based on a model performance evaluation result. For example, if the training device determines that model performance is significantly improved after a first round of training of the AI model, a data amount of the training dataset may be reduced. Specifically, the following steps are further included.

The training device may train the AI model based on the first training dataset, and determine the performance of the AI model. The training device may send second information to the network device based on the performance of the AI model, where the second information indicates related information of a second training dataset that the training device requests the network device to send. The training device receives the second training dataset from the network device, where the second training dataset is a training dataset based on the related information indicated by the second information, and the second training dataset is used for training the AI model. For example, a data amount of the second training dataset may be less than a data amount of the first training dataset. Subsequently, the training device may still train the AI based on the second training dataset, and perform iteration repeatedly. It is assumed that the training device performs training for Q (Q is an integer greater than 1) times until the training device determines that the AI model is converged (the "model is converged" may also be understood as that the AI model reaches target performance).

It should be noted that, in this embodiment, when the training device subsequently performs model training based on the requested training dataset, the sparse beam pattern of the AI model may be fixed, or it may be understood that in subsequent Q training processes, the sparse beam pattern is still the beam pattern indicated by the fourth information in step 707. It should be understood that during each training, the training device performs one full codebook sweeping based on a training dataset delivered by the first network device. Because a channel status (which may also be understood as a channel environment) is time-varying, measurement results of reference signals obtained after each full codebook sweeping are incompletely the same. Therefore, during each training, the M groups of reference signals in the N groups of reference signals correspond to different measurement results, and training labels determined by the training device are also different. In other words, the input information and the training label of the AI model change correspondingly. However, these changes are essentially caused by a channel state change, and the beam pattern does not change. In other words, in the solution provided in this embodiment, a variable in an AI model training process is only a channel state.

In another solution, during AI model training, the input information of the AI model is the measurement results of all reference signals obtained after full codebook sweeping. In other words, a beam pattern and a channel state change during each training, and model convergence performance is poor during AI model training. However, according to the method 700 provided in this application, during model training, the network device may indicate which measurement results in measurement results obtained through full codebook sweeping are the input information of the AI model, that is, only a channel state changes. Compared with the foregoing another solution, this solution can accelerate a convergence speed of the AI model, improve model training efficiency, and reduce occupation of air interface resources.

Optionally, step 710: The training device sends model training completion indication information to the first network device.

After completing training of the AI model, the training device may enter a model inference phase. For example, the first network device may subsequently send the sparse beam pattern and corresponding reference signals to the training device, and the training device obtains the input information of the AI model by measuring the reference signals. It is assumed that the AI model uses the classification method, and the input of the AI model is a measurement result of a reference signal. In this case, the AI model may output the K beam identifiers through inference. The K beam identifiers are beams corresponding to K measurement results with best channel quality in measurement results of reference signals in the full codebook inferred by the training device. The training device may feed back the K beam identifiers to the first network device. The first network device sends, to the training device again, the K groups of reference signals corresponding to the K beams. The training device measures the K groups of reference signals again, determines one group of reference signals with an optimal measurement result, uses a beam identifier corresponding to the group of reference signals as a finally selected beam, and communicates with the first network device by using the beam.

Based on the foregoing technical solution, in this application, the network device may indicate the input information of the AI model to the training device, so that only a channel state changes in an AI model training process. This can accelerate a convergence speed of the AI model, improve model training efficiency, and also reduce occupation of the air interface resources.

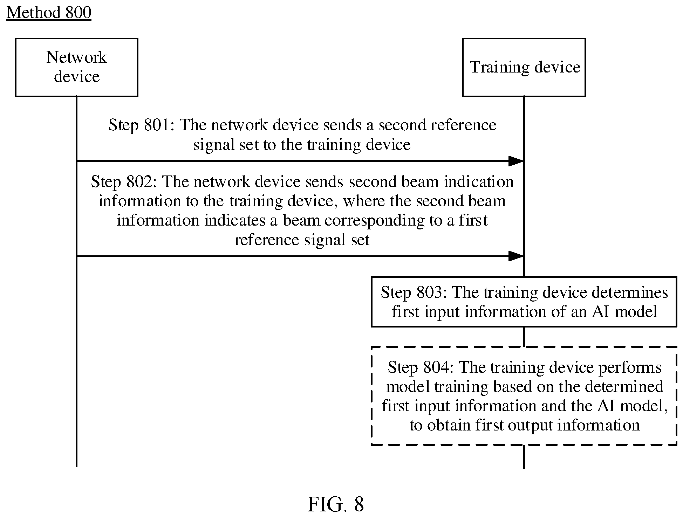

The method 700 provides the method for obtaining the input information of the AI model. The following method 800 provides a communication method. The method describes in more detail a method for obtaining input information of an AI model in a training phase. The method may be independently implemented with the foregoing method for obtaining input information, or may be applied in combination. As shown in FIG. 8, the method 800 includes the following steps.

Step 801: A network device sends a second reference signal set to a training device.

Correspondingly, the training device receives the second reference signal set from the network device.

In this embodiment, the second reference signal set includes N groups of reference signals, and each group of reference signals in the N groups of reference signals includes at least one reference signal. The "second reference signal set" may also be understood as a reference signal set corresponding to a full codebook beam. For example, each beam in the full codebook beam may correspond to one group of reference signals in the second reference signal set.

In a possible implementation, before step 801, the method may further include: The network device sends first configuration information to the training device, where the first configuration information may indicate one or more of the following: time domain resources of the N groups of reference signals, frequency domain resources of the N groups of reference signals, transmission periodicities of the N groups of reference signals, group identifiers of the N groups of reference signals, or beams of the N groups of reference signals.

Each group of reference signals has a group identifier.

It should be noted that in this application, if each group of reference signals in the N groups of reference signals includes only one reference signal, the group identifier of the group of reference signals is an identifier of the reference signal, that is, the group identifier may be replaced with the identifier of the reference signal.

In another possible implementation, before step 801, the method may further include: The network device sends third configuration information to the training device, where the third configuration information includes the respective group identifiers of the N groups of reference signals, and the third configuration information may indicate one or more of the following: the time domain resources of the N groups of reference signals, the frequency domain resources of the N groups of reference signals, the transmission periodicities of the N groups of reference signals, or beams of the N groups of reference signals.

In still another possible implementation, before step 801, the method may further include: The network device sends first configuration information to the training device, where the first configuration information includes the respective beam information of the N groups of reference signals, and the third configuration information may indicate one or more of the following: the time domain resources of the N groups of reference signals, the frequency domain resources of the N groups of reference signals, the transmission periodicities of the N groups of reference signals, or the group identifiers of the N groups of reference signals.

Step 802: The network device sends second beam indication information to the training device, where the second beam indication information indicates a beam corresponding to a first reference signal set.

Correspondingly, the training device receives the second beam indication information from the network device.

In this embodiment, the beam corresponding to the first reference signal set is a subset of a plurality of beams corresponding to the second reference signal set, and the first reference signal set includes M groups of reference signals, where N is an integer greater than M, and M is an integer greater than or equal to 1.

That the network device sends the second beam indication information to the training device may also be understood as that the network device indicates a sparse beam pattern to the training device. In other words, the second beam indication information may indicate, to the training device, that a sparse beam pattern that the training device needs to sweep is a pattern that includes specific beams in a full codebook.

In this embodiment, that the second beam indication information indicates a beam corresponding to a first reference signal set may be, for example, that the second beam indication information indicates a location of the beam corresponding to the first reference signal set in the plurality of beams corresponding to the second reference signal set. For example, there are 64 beams in the full codebook, and identifiers of the beams are respectively beam #1 to beam #64. However, the sparse beam pattern sent by the network device includes 16 beams. In this case, the second beam information may indicate which beams in the full codebook beam are the 16 beams (that is, which beams in the full codebook correspond to the first reference signal set). Specifically, there may be the following two implementations:

Implementation A

The second beam information includes N fields, the N fields are in one-to-one correspondence with the plurality of beams corresponding to the second reference signal set, bit values of M fields in the N fields are different from bit values of remaining (N-M) fields, and the network device may indicate the first reference signal set by using the M fields. For example, the bit values of the M fields are all "1", and the bit values of the remaining (N-M) fields are all "0". For example, there are 64 beams in the full codebook, and identifiers of the beams are respectively beam #1 to beam #64. However, the sparse beam pattern sent by the network device includes 16 beams: beam #1 to beam #16. Field #1 to field #16 in the second beam indication information respectively indicate beam #1 to beam 16 in the full codebook. For example, field #1 to field #16 in the second beam indication information respectively indicate reference signal group #1 to reference signal group #16 in the first reference signal set. Implementation A may also be understood as that the network device may directly indicate a beam location.

Implementation B

The second beam indication information includes group identifiers or beam information (for example, beam identifiers) of the M groups of reference signals, the M groups of reference signals are a part of the N groups of reference signals, and the predefined or preconfigured correspondence exits between the N groups of reference signals and the N beams. For example, the N groups of reference signals are in one-to-one correspondence with the N beams. For example, the group identifiers of the N groups of reference signals are in one-to-one correspondence with the N beam identifiers. For example, there are 64 beams in the full codebook, and identifiers of the beams are respectively beam #1 to beam #64. However, the sparse beam pattern sent by the network device includes 16 beams: beam #16 to beam #32. For example, in Implementation B, a beam identifier and a reference signal group identifier are in a one-to-one correspondence. The network device may indicate the sparse beam pattern by indicating the beam identifier (an example of beam information) and/or the reference signal group identifier to the training device. In comparison with Implementation A, in Implementation B, a beam location is indirectly indicated by using a group identifier or beam information of a reference signal. Because the beam information corresponds to the group identifier of the reference signal, a relationship between the group identifiers/beam information of the M groups of reference signals and the group identifiers/beam information of the N groups of reference signals is fixed.

Step 803: The training device determines first input information of an AI model.

For example, after receiving the second reference signal set, the training device may measure the N groups of reference signals in the second reference signal set, and obtain measurement results of the N groups of reference signals. In this case, the training device may determine, based on the second beam indication information and the measurement results of the N groups of reference signals in the second reference signal set, a measurement result corresponding to the beam indicated by the second beam indication information, and use the measurement result corresponding to the beam indicated by the second beam indication information of the AI model as the first input information. That is, a measurement result of a beam corresponding to the sparse beam pattern is used as the first input information.

Corresponding to the two implementations in step 802, after determining the sparse beam pattern, the training device may determine that the input information of the AI model is a measurement result corresponding to a reference signal at a specific beam location in a full codebook. For example, in Implementation A, the training device may use, as the input information of the AI model, measurement results of reference signal group #16 to reference signal group #32 corresponding to beam #16 to beam #32 in the full codebook. For another example, in Implementation B, the training device may use measurement results of reference signal group #1, reference signal group #4, reference signal group #8, reference signal group #12, reference signal group #16, reference signal group #20, reference signal group #24, reference signal group #28, reference signal group #32, reference signal group #36, reference signal group #40, reference signal group #44, reference signal group #48, reference signal group #52, reference signal group #56, and reference signal group #60 as the input information of the AI model.

Optionally, step 804: The training device performs model training based on the determined first input information and the AI model, to obtain first output information.

In this application, the first output information indicates K beams that are predicted to have best channel quality in the plurality of beams corresponding to the second reference signal set, where K is an integer greater than or equal to 1, and K is less than N.

For example, as described above, the classification method and the regression method may be used for implementation based on different algorithms for training the AI model. For example, when the AI model is trained by using the classification method, the first output information may include information about the K beams that are predicted to have the best channel quality in the plurality of beams corresponding to the second reference signal set. Alternatively, the first output information may include respective group identifiers or beam information of the K groups of reference signals, where the K groups of reference signals correspond to K measurement results that are predicted to have best channel quality in N measurement results corresponding to the N groups of reference signals, and a predefined or preconfigured correspondence exists between the respective group identifiers of the K groups of reference signals and the K beams, namely, the K beam information. For example, when the AI model is trained by using the regression method, the first output information may include a plurality of pieces of beam information corresponding to the N groups of reference signals and N predicted measurement results corresponding to the beam information. Alternatively, the first output information may include respective group identifiers of the N groups of reference signals and N predicted measurement results of the N groups of reference signals, and a predefined or preconfigured correspondence exists between the N groups of reference signals and N pieces of beam information.

In this embodiment, the "first output information" may also be understood as a training output result of the AI model. If the AI model is trained by using the regression method, the first input information may be, for example, RSRP measurement results of the M groups of reference signals. In this case, the first output information may include predicted RSRP measurement results of the reference signals corresponding to the N beams and N group identifiers respectively corresponding to the RSRP measurement results. If the AI model is trained by using the classification method, the first input information may be, for example, measurement results of the M groups of reference signals corresponding to the M beams. In this case, the first output information may be beam identifiers of the K beams that are predicted to have optimal channel quality measurement results in the N beams or K group identifiers corresponding to the K beams.

The training device may compare the first output information with the label to obtain the training loss of the AI model. The classification method for model training is used as an example. The first output information is the K group identifiers corresponding to the K beams with the optimal channel quality measurement results in the N beams that are inferred by the training device. It is assumed that a training label determined by the training device is the K group identifiers corresponding to the K groups of reference signals with the optimal channel quality measurement results in the N groups of reference signals corresponding to N beams during full codebook sweeping. In this case, the training device may compare an output result with the training label, determine the performance of the AI model, and adjust a model parameter. The foregoing process may be understood as one training of the AI model. The training device may measure the performance of the AI model based on the training loss and the training accuracy of the model training, and repeatedly perform iteration until the model is converged.

Based on the foregoing technical solution, the network device may indicate the input information of the AI model to the training device, so that for a same sparse beam pattern, a channel state changes in an AI model training process. This can accelerate a convergence speed of the AI model, improve model training efficiency, and also reduce occupation of the air interface resources.

It should be understood that, for a plurality of sparse beam patterns, the foregoing described steps may be repeated.

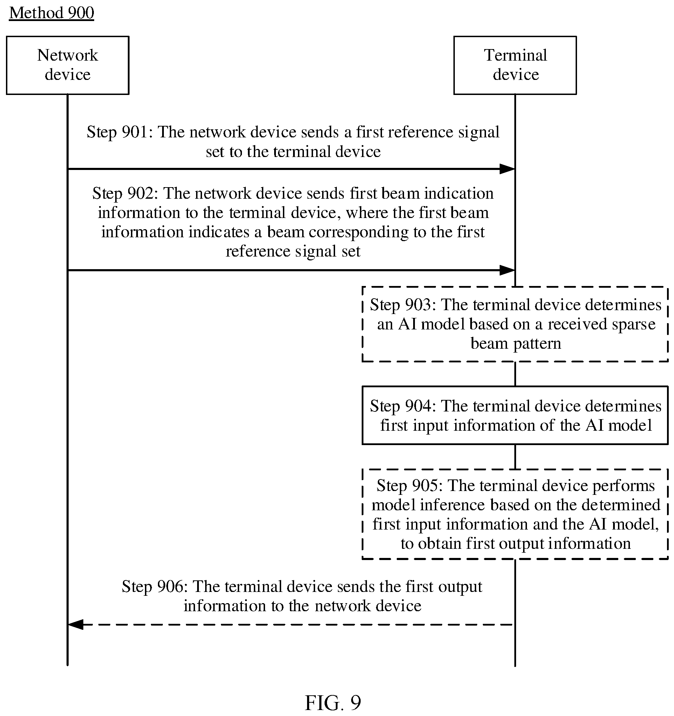

The foregoing methods 700 and 800 mainly describe specific implementation solutions of obtaining input information in a model training phase. The following method 900 in FIG. 9 mainly describes that the method may also be used in a model inference phase. In the method 900, it is assumed that the AI model has been trained. For example, the model may be trained by using the method 700 or the method 800. For another example, the AI model may be trained by using an existing solution. For example, a plurality of trained AI models may be directly preconfigured on an inference device like a terminal device. For example, each AI model is trained by using one or more sparse beam patterns, for completing the AI model. Therefore, the model inference phase can be directly started. It may be understood that the method described in FIG. 9 may be applied independently of the method in FIG. 8, or may be applied in combination with the method in FIG. 8. In combination with the application, respective involved same terms are represented by X, and are respectively configuration information in a training process and configuration information in an inference process, to facilitate differentiation. For example, configuration information is the configuration information in the training process or the configuration information in the inference process.

Step 901: A network device sends a first reference signal set to a terminal device.

Correspondingly, the terminal device receives the first reference signal set from the network device.

In this embodiment, the first reference signal set includes M groups of reference signals, each group of reference signals in the M groups of reference signals includes at least one reference signal, and M is an integer greater than or equal to 1. The "first reference signal set" may also be understood as a reference signal set corresponding to a sparse beam pattern. For example, the sparse beam pattern is a subset of a full codebook beam, or the reference signal set corresponding to the sparse beam pattern belongs to a subset of a second reference signal set corresponding to the full codebook beam (that is, the first reference signal set is the subset of the second reference signal set), where the second reference signal set includes N groups of reference signals, each group of reference signals in the N groups of reference signals includes at least one reference signal.

In a possible implementation, before step 901, the method may further include: The network device sends first configuration information to the terminal device, where the first configuration information may indicate one or more of the following: time domain resources of the N groups of reference signals, frequency domain resources of the N groups of reference signals, transmission periodicities of the N groups of reference signals, group identifiers of the N groups of reference signals, or beam information of the N groups of reference signals.

In another possible implementation, before step 901, the method may further include: The network device sends second configuration information to the terminal device, where the second configuration information includes first beam information, the first beam information includes group identifiers of the M groups of reference signals, and the second configuration information may further include one or more of time domain resources of the M groups of reference signals, frequency domain resources of the M groups of reference signals, transmission periodicities of the M groups of reference signals, or beam information.

In a possible implementation, before step 901, the method may further include: The network device sends second configuration information to the terminal device, where the second configuration information includes first beam information, the first beam information includes beam information of the M groups of reference signals, and the second configuration information may further include one or more of time domain resources of the M groups of reference signals, frequency domain resources of the M groups of reference signals, transmission periodicities of the M groups of reference signals, or group identifiers.

In still another possible implementation, before step 901, the method may further include: The network device sends third configuration information to the terminal device, where the third configuration information includes the respective group identifiers of the N groups of reference signals, and the third configuration information may indicate one or more of the following: the time domain resources of the N groups of reference signals, the frequency domain resources of the N groups of reference signals, the transmission periodicities of the N groups of reference signals, or beams of the N groups of reference signals. N group identifiers of the N groups of reference signals include M group identifiers of the M groups of reference signals.

In still another possible implementation, before step 901, the method may further include: The network device sends third configuration information to the terminal device, where the third configuration information includes the respective beam information of the N groups of reference signals, and the third configuration information may indicate one or more of the following: the time domain resources of the N groups of reference signals, the frequency domain resources of the N groups of reference signals, the transmission periodicities of the N groups of reference signals, or the group identifiers of the N groups of reference signals. N pieces of beam information of the N groups of reference signals include M pieces of beam information of the M groups of reference signals.

Step 902: The network device sends first beam indication information to the terminal device, where the first beam indication information indicates a beam corresponding to the first reference signal set.

Correspondingly, the terminal device receives the first beam indication information from the network device.

In this embodiment, the beam corresponding to the first reference signal set is a subset of a plurality of beams corresponding to the second reference signal set.

That the network device sends first beam indication information to the terminal device may also be understood as that the network device indicates a sparse beam pattern to the terminal device. In other words, the first beam indication information may indicate, to the terminal device, that a sparse beam pattern that the terminal device needs to sweep is a pattern that includes specific beams in a full codebook.

In this embodiment, that second beam indication information indicates the beam corresponding to the first reference signal set may be, for example, that the second beam indication information indicates a location of the beam corresponding to the first reference signal set in the plurality of beams corresponding to the second reference signal set. For example, there are 64 beams in the full codebook, and identifiers of the beams are respectively beam #1 to beam #64. However, the sparse beam pattern sent by the first network device includes 16 beams. In this case, the second beam information may indicate which beams in the full codebook beam are the 16 beams (that is, which beams in the full codebook correspond to the first reference signal set). Specifically, there may be the following two implementations:

Implementation A

The first beam information includes N fields, the N fields are in one-to-one correspondence with the plurality of beams corresponding to the second reference signal set, bit values of M fields in the N fields are different from bit values of remaining (N-M) fields, and the network device may indicate the first reference signal set by using the M fields. For example, the bit values of the M fields are all "1", and the bit values of the remaining (N-M) fields are all "0". For example, there are 64 beams in the full codebook, and identifiers of the beams are respectively beam #1 to beam #64. However, the sparse beam pattern sent by the network device includes 16 beams: beam #1 to beam #16. Field #1 to field #16 in the second beam indication information respectively indicate beam #1 to beam 16 in the full codebook. For example, field #1 to field #16 in the second beam indication information respectively indicate reference signal group #1 to reference signal group #16 in the first reference signal set. Implementation A may also be understood as that the network device may directly indicate a beam location.

Implementation B

The first beam indication information includes the group identifiers or the beam information (for example, beam identifiers) of the M groups of reference signals, the M groups of reference signals are a part of the N groups of reference signals, and a predefined or preconfigured correspondence exits between the N groups of reference signals and the N beams. For example, the N groups of reference signals are in one-to-one correspondence with the N beams. For example, the group identifiers of the N groups of reference signals are in one-to-one correspondence with the N beam identifiers. For example, there are 64 beams in the full codebook, and identifiers of the beams are respectively beam #1 to beam #64. However, the sparse beam pattern sent by the first network device includes 16 beams: beam #16 to beam #32. For example, in Implementation B, a beam identifier and a reference signal group identifier are in a one-to-one correspondence. The network device may indicate the sparse beam pattern by indicating the beam identifier (an example of beam information) and/or the reference signal group identifier to the terminal device. In comparison with Implementation A, in Implementation B, a beam location is indirectly indicated by using a group identifier or beam information of a reference signal. Because the beam information corresponds to the group identifier of the reference signal, a relationship between the group identifiers/beam information of the M groups of reference signals and the group identifiers/beam information of the N groups of reference signals may be fixed.

Optionally, step 903: The terminal device determines an AI model based on the received first beam indication information, namely, the sparse beam pattern.

It is assumed that a plurality of AI models are preconfigured on the terminal device, and in this case, the terminal device may determine an AI model based on a sparse beam pattern. For example, the terminal device may identify the received sparse beam pattern, and may determine, by identifying the beam pattern, the AI model corresponding to the sparse beam pattern from the plurality of locally preconfigured AI models. It may also be understood that the terminal device may determine, from the plurality of AI models based on the sparse beam pattern, an AI model with best matching.

In this application, that the terminal device identifies the sparse beam pattern may be understood as that the terminal device needs to determine that the received beam pattern includes beams at specific locations in the full codebook beam. In other words, the terminal device needs to establish a relationship between the received sparse beam pattern and the beams in the full codebook, that is, needs to determine that beams in the sparse beam pattern are specific beams in the full codebook. Based on configurations of the network device and the terminal device, the terminal device may determine the sparse beam pattern based on Implementation A and/or Implementation B.

Step 904: The terminal device determines first input information of the AI model.

For example, after receiving the first reference signal set, the terminal device may measure the M groups of reference signals in the first reference signal set, and obtain measurement results of the M groups of reference signals. In this case, the terminal device may determine the first input information of the AI model based on the measurement results of the M groups of reference signals.

Corresponding to the two implementations in step 902, after determining the sparse beam pattern, the terminal device may determine that the input information of the AI model is a measurement result corresponding to a reference signal at a specific beam location in a full codebook. For example, in Implementation A, the terminal device may use, as the input information of the AI model, measurement results of reference signal group #16 to reference signal group #32 corresponding to beam #16 to beam #32 in the full codebook. For another example, in Implementation B, the terminal device may use measurement results of reference signal group #1, reference signal group #4, reference signal group #8, reference signal group #12, reference signal group #16, reference signal group #20, reference signal group #24, reference signal group #28, reference signal group #32, reference signal group #36, reference signal group #40, reference signal group #44, reference signal group #48, reference signal group #52, reference signal group #56, and reference signal group #60 as the input information of the AI model.

Optionally, step 905: The terminal device performs model inference based on the determined first input information and the AI model, to obtain the first output information.

In this application, the first output information indicates K beams that are predicted to have best channel quality in the plurality of beams corresponding to the second reference signal set, where K is an integer greater than or equal to 1, and K is less than N.

For this step, refer to the descriptions of the first output information in the inference process involved in the training process in step 804 in FIG. 8. Details are not described herein again. A difference between this step and step 804 lies in that in this step, the first output information and the label do not need to be obtained by performing loss, and the first output information is an available prediction result.

Optionally, step 906: The terminal device sends the first output information to the network device.

Subsequently, the network device may send reference signals corresponding to the first output information to the terminal device again, and the terminal device measures the reference signals again, determines a reference signal with an optimal measurement result, uses a beam identifier corresponding to the reference signal as a finally selected beam, and communicates with the network device by using the beam.

It should be understood in this application that an optimal measurement result may include a maximum RSRP value or a maximum SINR value, or may be another evaluation standard, which is not limited herein.

For example, it is assumed that the AI model uses a classification method. In this case, the AI model may output the K beam identifiers through inference. The K beam identifiers are beams corresponding to K measurement results with best channel quality in measurement results of reference signals in the full codebook inferred by the terminal device. The terminal device may feed back the K beam identifiers to the first network device. The first network device sends, to the terminal device again, the K groups of reference signals corresponding to the K beams. The terminal device measures the K groups of reference signals again, determines one group of reference signals with an optimal measurement result, uses a beam identifier corresponding to the group of reference signals as a finally selected beam, and communicates with the first network device by using the beam.

Based on the foregoing technical solutions, in this application, the terminal device may identify the sparse beam pattern, and further determine the input information of the AI model, so that a model inference result is more accurate.

It may be understood that the examples in the method 500 to the method 900 in embodiments of this application are merely intended to help a person skilled in the art understand embodiments of this application, but are not intended to limit embodiments of this application to specific scenarios in the examples. It is clear that the person skilled in the art can make various equivalent modifications or variations to the examples in the method 500 to the method 900, and such modifications or variations also fall within the scope of embodiments of this application.

It may be further understood that, some optional features in embodiments of this application may be independent of other features in some scenarios, or may be combined with other features in some scenarios. This is not limited.

It may be further understood that embodiments described in this application may be independent solutions, or may be combined based on internal logic. All these solutions fall within the protection scope of this application. In addition, interpretations or descriptions of terms in embodiments may be mutually referenced or interpreted in embodiments. This is not limited.

It should be understood that "predefine" in this application may be understood as "define", "define in advance", "store", "pre-store", "pre-negotiate", "preconfigure", "build into", or "pre-burn".

It may be understood that, in this application, "if" and "in case of" both mean that an apparatus performs corresponding processing in an objective case, but do not constitute any limitation on time, do not require the apparatus to necessarily have a determining action during implementation, and do not mean any other limitation.

It may be understood that "and/or" in this specification describes an association relationship between associated objects, and represents that three relationships may exist. For example, A and/or B may represent the following cases: Only A exists, both A and B exist, and only B exists, where A and B may be singular or plural. In the text description of this application, the symbol "/" usually indicates an "or" relationship between associated objects. In a formula in this application, the symbol "/" indicates a "division" relationship between associated objects.

The foregoing mainly describes the solutions provided in embodiments of this application from a perspective of interaction between nodes. It may be understood that, to implement the foregoing functions, the nodes such as the training device and the network device include corresponding hardware structures and/or software modules for performing the functions. The person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of this application.

It may be understood that, to implement the functions in the foregoing embodiments, the network device and the training device include corresponding hardware structures and/or software modules for performing the functions. The person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

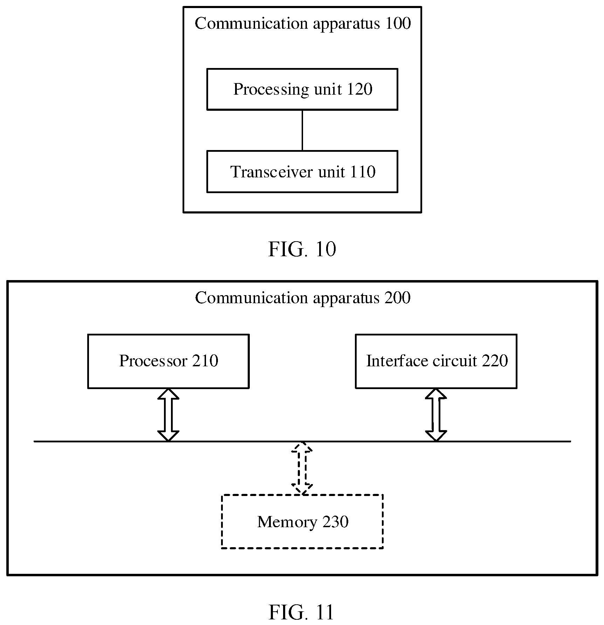

FIG. 10 and FIG. 11 are diagrams of structures of possible communication apparatuses according to embodiments of this application. The communication apparatuses may be configured to implement the functions of the training device or the network device in the foregoing method embodiments, and therefore can also implement the beneficial effects in the foregoing method embodiments. In embodiments of this application, the communication apparatus may be one of the terminal devices 120a to 120j (an example of the training device or an example of the inference device) shown in FIG. 1, or may be the network device 110a or 110b shown in FIG. 1, or may be a module (for example, a chip) used in the terminal device or the network device.

As shown in FIG. 10, the communication apparatus 100 includes a processing unit 120 and a transceiver unit 110. The communication apparatus 100 is configured to implement a function of the training device or the network device in the method embodiments shown in FIG. 5 to FIG. 9.

When the communication apparatus 100 is configured to implement the function of the training device in the method embodiment shown in FIG. 5, the transceiver unit 110 is configured to send first information, where the first information indicates related information of a first training dataset that the apparatus requests to send; and the transceiver unit 110 is further configured to receive the first training dataset, where the first training dataset is a training dataset based on the related information indicated by the first information, and the first training dataset is used for training an artificial intelligence AI model.

In a possible implementation, the processing unit 120 is configured to train the AI model based on the first training dataset, and determine performance of the AI model. The processing unit 120 is further configured to control, based on the performance of the AI model, the transceiver unit 110 to send second information, where the second information indicates related information of a second training dataset that the apparatus requests to send. The transceiver unit 110 is configured to receive the second training dataset, where the second training dataset is a training dataset based on the related information indicated by the second information, and the second training dataset is used for training the AI model.

When the communication apparatus 100 is configured to implement the function of the first network device in the method embodiment shown in FIG. 5, the transceiver unit 110 is configured to receive first information, where the first information indicates related information of a first training dataset that the apparatus requests to send; and the processing unit 120 is configured to control, based on the related information indicated by the first information, the transceiver unit 110 to send the first training dataset, where the first training dataset is used for training an artificial intelligence AI model.

In a possible implementation, the transceiver unit 110 is configured to obtain third information, where the third information is related information for training the AI model; and that the processing unit 120 is configured to control, based on the related information indicated by the first information, the transceiver unit 110 to send the first training dataset includes: the processing unit 120 is configured to control, based on the related information indicated by the first information, and the third information, the transceiver unit 110 to send the first training dataset.

In a possible implementation, the transceiver unit 110 is configured to receive second information, where the second information indicates related information of a second training dataset that is requested to be sent, the second information is determined based on performance of the AI model, and the performance of the AI model is determined through training based on the first training dataset; and the processing unit 120 is configured to control, based on the related information indicated by the second information, the transceiver unit 110 to send the second training dataset, where the second training dataset is used for training the AI model.

When the communication apparatus 100 is configured to implement the function of the first network device in the method embodiment shown in FIG. 6, the transceiver unit 110 is configured to obtain third information, where the third information is related information for training an artificial intelligence AI model; the transceiver unit 110 is configured to receive first information, where the first information is used to request to send a training dataset; the processing unit 120 is configured to determine a to-be-sent first training dataset based on the third information; and the processing unit 120 is configured to control, based on the first information, the transceiver unit 110 to send the first training dataset, where the first training dataset is used for training the AI model.

In a possible implementation, the third information further includes information about duration of sending the training dataset and/or information about a manner of sending the training dataset, and the processing unit 120 is configured to determine, based on the third information and a resource usage status of the apparatus, whether the apparatus and/or the training device have a capability of supporting training of the AI model.

In a possible implementation, that the processing unit 120 is configured to determine a to-be-sent first training dataset based on the third information includes: The processing unit 120 is configured to determine the to-be-sent first training dataset based on the first information and the third information, where the first information indicates related information of the first training dataset that the first network device is requested to send.

In a possible implementation, the transceiver unit 110 is configured to receive second information, where the second information indicates related information of a second training dataset that the apparatus is requested to send, the second information is determined based on performance of the AI model, and the performance of the AI model is determined through training based on the first training dataset; and the processing unit 120 is configured to determine the to-be-sent second training dataset based on the second information.

When the communication apparatus 100 is configured to implement the function of the training device in the method embodiment shown in FIG. 7, the processing unit 120 is configured to measure N groups of reference signals, and obtain N groups of measurement results corresponding to the N groups of reference signals, where each group of reference signals in the N groups of reference signals includes at least one reference signal, each group of reference signals has a same group identifier, and N is an integer greater than 1. The transceiver unit 110 is configured to receive fourth information, where the fourth information indicates M groups of reference signals in the N groups of reference signals. The processing unit 120 is configured to determine first input information of an artificial intelligence AI model based on the fourth information and the N groups of measurement results corresponding to the N groups of reference signals, where the first input information includes M groups of measurement results corresponding to the M groups of reference signals. The AI model is used to obtain first output information based on the first input information, where the first output information includes respective group identifiers of K groups of reference signals in the N groups of reference signals, and the respective group identifiers of the K groups of reference signals correspond to K groups of measurement results with best channel quality in the N groups of measurement results.

In a possible implementation, the transceiver unit 110 is configured to receive configuration information, where the configuration information indicates one or more of the following: time domain resources of the N groups of reference signals, frequency domain resources of the N groups of reference signals, transmission periodicities of the N groups of reference signals, or group identifiers of the N groups of reference signals.

When the communication apparatus 100 is configured to implement the function of the network device in the method embodiment shown in FIG. 7, the transceiver unit 110 is configured to send N groups of reference signals to the training device, where each group of reference signals in the N groups of reference signals includes at least one reference signal, each group of reference signals has a same group identifier, and N is an integer greater than 1. The transceiver unit 110 is configured to send fourth information to the training device, where the fourth information indicates M groups of reference signals in the N groups of reference signals, and the M groups of reference signals are used to determine first input information. An AI model is used to obtain first output information based on the first input information, where the first output information includes respective group identifiers of K groups of reference signals in the N groups of reference signals, and the respective group identifiers of the K groups of reference signals correspond to K groups of measurement results with best channel quality in N groups of measurement results corresponding to the N groups of reference signals.

In a possible implementation, the transceiver unit 110 is configured to send configuration information, where the configuration information indicates one or more of the following: time domain resources of the N groups of reference signals, frequency domain resources of the N groups of reference signals, transmission periodicities of the N groups of reference signals, or group identifiers of the N groups of reference signals.

When the communication apparatus 100 is configured to implement the function of the training device in the method embodiment shown in FIG. 8, the transceiver unit 110 is configured to receive a second reference signal set, where the second reference signal set includes N groups of reference signals, each group of reference signals in the N groups of reference signals includes at least one reference signal, and N is an integer greater than 1. The transceiver unit 110 is further configured to receive second beam indication information, where the second beam indication information indicates a beam corresponding to a first reference signal set, the beam corresponding to the first reference signal set is a subset of a plurality of beams corresponding to the second reference signal set, the beam corresponding to the first reference signal set is used to determine first input information of an AI model in the training device, the first input information is based on a measurement result of the beams corresponding to the first reference signal set, the first reference signal set includes M groups of reference signals, N is an integer greater than M, and M is an integer greater than or equal to 1.

In a possible implementation, the transceiver unit 110 is further configured to send first configuration information.

In a possible implementation, the transceiver unit 110 is further configured to send third configuration information.

In a possible implementation, the processing unit 120 is further configured to measure the N groups of reference signals to obtain N measurement results.

When the communication apparatus 100 is configured to implement the function of the network device in the method embodiment shown in FIG. 8, the transceiver unit 110 is configured to receive a second reference signal set, where the second reference signal set includes N groups of reference signals, each group of reference signals in the N groups of reference signals includes at least one reference signal, and N is an integer greater than 1. The transceiver unit 110 is further configured to receive second beam indication information, where the second beam indication information indicates a beam corresponding to a first reference signal set, the beam corresponding to the first reference signal set is a subset of a plurality of beams corresponding to the second reference signal set, the beam corresponding to the first reference signal set is used to determine first input information of an AI model in the training device, the first input information is based on a measurement result of the beams corresponding to the first reference signal set, the first reference signal set includes M groups of reference signals, N is an integer greater than M, and M is an integer greater than or equal to 1.

In a possible implementation, the transceiver unit 110 is configured to send first configuration information.

In a possible implementation, the transceiver unit 110 is configured to send third configuration information.

When the communication apparatus 100 is configured to implement the function of the terminal device in the method embodiment shown in FIG. 9, the transceiver unit 110 is configured to receive a first reference signal set, where the first reference signal set includes M groups of reference signals, each group of reference signals in the M groups of reference signals includes at least one reference signal, and M is an integer greater than or equal to 1. The transceiver unit 110 is further configured to receive first beam indication information, where the first beam indication information indicates a beam corresponding to the first reference signal set, the first reference signal set is used to determine first input information of an AI model, the first input information is based on measurement results of the M groups of reference signals included in the first reference signal set, the beam corresponding to the first reference signal set is a subset of a plurality of beams corresponding to a second reference signal set, the second reference signal set includes N groups of reference signals, and N is an integer greater than or equal to M.

In a possible implementation, the transceiver unit 110 is configured to receive first configuration information.

In a possible implementation, the transceiver unit 110 is configured to receive second configuration information.

In a possible implementation, the transceiver unit 110 is configured to receive third configuration information.

In a possible implementation, the processing unit 120 is configured to obtain first output information based on the first input information, and the transceiver unit 110 is configured to send the first output information.

When the communication apparatus 100 is configured to implement the function of the network device in the method embodiment shown in FIG. 9, the transceiver unit 110 is configured to send a first reference signal set, where the first reference signal set includes M groups of reference signals, each group of reference signals in the M groups of reference signals includes at least one reference signal, and M is an integer greater than or equal to 1. The transceiver unit 110 is further configured to send first beam indication information, where the first beam indication information indicates a beam corresponding to the first reference signal set, the first reference signal set is used to determine first input information of an AI model, the first input information is based on measurement results of the M groups of reference signals included in the first reference signal set, the beam corresponding to the first reference signal set is a subset of a plurality of beams corresponding to a second reference signal set, the second reference signal set includes N groups of reference signals, and N is an integer greater than or equal to M.

In a possible implementation, the transceiver unit 110 is configured to send first configuration information.

In a possible implementation, the transceiver unit 110 is configured to send second configuration information.

In a possible implementation, the transceiver unit 110 is configured to send third configuration information.

In a possible implementation, the transceiver unit 110 is configured to receive first output information.

For more detailed descriptions of the processing unit 120 and the transceiver unit 110, directly refer to the related descriptions in the method embodiments shown in FIG. 5 to FIG. 9. Details are not described herein again.

As shown in FIG. 11, a communication apparatus 200 includes a processor 210 and an interface circuit 220. The processor 210 is coupled to the interface circuit 220. It may be understood that the interface circuit 220 may be a transceiver or an input/output interface. Optionally, the communication apparatus 200 may further include a memory 230, configured to store instructions executed by the processor 210, store input data needed by the processor 210 to run the instructions, or store data generated after the processor 210 runs the instructions.

When the communication apparatus 200 is configured to implement the method shown in FIG. 5, the processor 210 is configured to implement a function of the processing unit 120, and the interface circuit 220 is configured to implement a function of the transceiver unit 110.

When the communication apparatus 200 is configured to implement the method shown in FIG. 6, the processor 210 is configured to implement a function of the processing unit 120, and the interface circuit 220 is configured to implement a function of the transceiver unit 110.

When the communication apparatus 200 is configured to implement the method shown in FIG. 7, the processor 210 is configured to implement a function of the processing unit 120, and the interface circuit 220 is configured to implement a function of the transceiver unit 110.

When the communication apparatus 200 is configured to implement the method shown in FIG. 8, the processor 210 is configured to implement a function of the processing unit 120, and the interface circuit 220 is configured to implement a function of the transceiver unit 110.

When the communication apparatus 200 is configured to implement the method shown in FIG. 9, the processor 210 is configured to implement a function of the processing unit 120, and the interface circuit 220 is configured to implement a function of the transceiver unit 110.

It should be understood that the processor shown in FIG. 11 may include at least one processor, and the interface circuit may also include a plurality of interface circuits.

For explanations and beneficial effects of related content in any one of the apparatuses provided above, refer to the corresponding method embodiment provided above. Details are not described herein again.

When the communication apparatus is a chip used in the training device (or the terminal device), the chip of the training device (or the terminal device) implements a function of the training device (or the terminal device) in the foregoing method embodiments. The chip of the training device (or the terminal device) receives information from another module (for example, a radio frequency module or an antenna) in the training device (or the terminal device), where the information is sent by the network device to the training device (or the terminal device); or the chip of the training device (or the terminal device) sends information to another module (for example, a radio frequency module or an antenna) in the training device (or the terminal device), where the information is sent by the training device (or the terminal device) to the network device.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

Based on the methods provided in embodiments of this application, this application further provides a computer program product. The computer program product stores computer program code. When the computer program code is run on a computer, the computer is enabled to perform the method performed by the training device (or the terminal device) or the network device in the embodiments in the method 500 to the method 900.

Based on the methods provided in embodiments of this application, this application further provides a computer-readable medium. The computer-readable medium stores program code. When the program code is run on a computer, the computer is enabled to perform the method performed by the training device (or the terminal device) or the network device in the method 500 to the method 900.

Based on the methods provided in embodiments of this application, this application further provides a communication system. The communication system includes a training device and a first network device. The training device is configured to perform the steps corresponding to the training device in the method 500, and the first network device is configured to perform the steps corresponding to the first network device in the method 500.

Based on the methods provided in embodiments of this application, this application further provides a communication system. The communication system includes a training device and a first network device. The training device is configured to perform the steps corresponding to the training device in the method 600, and the network device is configured to perform the steps corresponding to the first network device in the method 600.

Based on the methods provided in embodiments of this application, this application further provides a communication system. The communication system includes a training device and a first network device. The training device is configured to perform the steps corresponding to the training device in the method 700, and the network device is configured to perform the steps corresponding to the first network device in the method 700.

Based on the methods provided in embodiments of this application, this application further provides a communication system. The communication system includes a training device and a network device. The training device is configured to perform the steps corresponding to the training device in the method 800, and the network device is configured to perform the steps corresponding to the network device in the method 800.

Based on the methods provided in embodiments of this application, this application further provides a communication system. The communication system includes an inference device like a terminal device, and a network device. The terminal device is configured to perform the steps corresponding to the terminal device in the method 900, and the network device is configured to perform the steps corresponding to the network device in the method 900.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A training dataset obtaining method, wherein the method is performed by a training device or a chip or circuit configured to be disposed in a training device, and the method comprises:

   sending first information to a network device, wherein the first information indicates related information of a first training dataset that the training device requests the network device to send; and
   receiving the first training dataset from the network device, wherein the first training dataset is a training dataset based on the related information indicated by the first information, and the first training dataset is used for training an artificial intelligence AI model.

2. The method according to claim 1, wherein the related information comprises at least one of the following: information about a size of the first training dataset, configuration information of an input of the AI model, or configuration information of a reference signal used for training the AI model.

3. The method according to claim 2, wherein
   the information about the size of the first training dataset is determined by the training device based on a size of a training dataset needed for completing training of the AI model.

4. The method according to claim 2, wherein before the sending first information to a network device, the method further comprises:

   determining first performance of the AI model; and
   determining the information about the size of the first training dataset based on the first performance of the AI model and second performance of the AI model, wherein the first performance is current performance of the AI model, and the second performance is target performance of the AI model.

5. The method according to any one of claims 2 to 4, wherein the configuration information of the reference signal comprises at least one of the following: an identifier of the reference signal, a time domain resource of the reference signal, a frequency domain resource of the reference signal, a transmission periodicity of the reference signal, or a type of the transmitted reference signal.

6. The method according to any one of claims 1 to 5, wherein the first information comprises at least one of the following: identification information of the AI model, information about an application scenario of the AI model, usage information of the AI model, or information about a computing capability of the training device.

7. The method according to any one of claims 1 to 6, wherein the method further comprises:

training the AI model based on the first training dataset, and determining performance of the AI model;
sending second information to the network device based on the performance of the AI model, wherein the second information indicates related information of a second training dataset that the training device requests the network device to send; and
receiving the second training dataset from the network device, wherein the second training dataset is a training dataset based on the related information indicated by the second information, and the second training dataset is used for training the AI model.

8. A training dataset obtaining method, wherein the method is performed by a first network device or a chip or circuit configured to be disposed in a first network device, and the method comprises:

receiving first information from a training device, wherein the first information indicates related information of a first training dataset that the first network device is requested to send; and
sending the first training dataset to the training device based on the related information indicated by the first information, wherein the first training dataset is used for training the artificial intelligence AI model.

9. The method according to claim 8, wherein the related information comprises at least one of the following: information about a size of the first training dataset, configuration information of an input of the AI model, or configuration information of a reference signal used for training the AI model.

10. The method according to claim 9, wherein the information about the size of the first training dataset is determined based on a size of a training dataset needed for completing training of the AI model.

11. The method according to claim 9 or 10, wherein the configuration information of the reference signal comprises at least one of the following: an identifier of the reference signal, a time domain resource of the reference signal, a frequency domain resource of the reference signal, a transmission periodicity of the reference signal, or a type of the transmitted reference signal.

12. The method according to any one of claims 8 to 11, wherein the first information comprises at least one of the following: identification information of the AI model, information about an application scenario of the AI model, usage information of the AI model, or information about a computing capability of the training device.

13. The method according to any one of claims 8 to 12, wherein the method further comprises:

obtaining third information from a second network device, wherein the third information is related information for training the AI model, and the first network device is a target network device to which the training device is handed over from the second network device; and
the sending the first training dataset to the training device based on the related information indicated by the first information comprises:
sending the first training dataset to the training device based on the related information indicated by the first information, and the third information.

14. The method according to claim 13, wherein the third information comprises at least one of the following: information about a size of a training dataset that the training device requests the second network device to send, information about the size of the training dataset needed for completing training of the AI model, the identification information of the AI model, or the information about the computing capability of the training device.

15. The method according to claim 13 or 14, wherein the first network device stores a first mapping relationship, and the first mapping relationship is a mapping relationship between an identifier of an AI model and a size of a training dataset corresponding to the identifier of the AI model.

16. The method according to any one of claims 13 to 15, wherein the third information further comprises: information about duration of sending the training dataset and/or information about a manner of sending the training dataset, and the method further comprises:

determining, based on the third information and a resource usage status of the first network device, whether the first network device and/or the training device have/has a capability of supporting training of the AI model.

17. The method according to any one of claims 8 to 16, wherein the method further comprises:

receiving second information from the training device, wherein the second information indicates related information of a second training dataset that the first network device is requested to send, the second information is determined based on performance of the AI model, and the performance of the AI model is determined through training based on the first training dataset; and

sending the second training dataset to the training device based on the related information indicated by the second information, wherein the second training dataset is used for training the AI model.

18. A training dataset obtaining method, wherein the method is performed by a first network device or a chip or circuit configured to be disposed in the first network device, and the method comprises:

obtaining third information from a second network device, wherein the third information is related information for training an artificial intelligence AI model, and the first network device is a target network device to which a training device is handed over from the second network device;

receiving first information from the training device, wherein the first information is used to request the first network device to send a training dataset; and

determining a to-be-sent first training dataset based on the third information; and sending, by the first network device, the first training dataset to the training device based on the first information, wherein the first training dataset is used for training the AI model.

19. The method according to claim 18, wherein the third information comprises at least one of the following: information about a size of a training dataset that the training device requests the second network device to send, information about a size of a training dataset needed for completing training of the AI model, identification information of the AI model, or information about a computing capability of the training device.

20. The method according to claim 18 or 19, wherein the first network device stores a first mapping relationship, and the first mapping relationship is a mapping relationship between an identifier of the AI model and a size of a training dataset corresponding to the identifier of the AI model.

21. The method according to any one of claims 18 to 20, wherein the third information further comprises information about duration of sending the training dataset and/or information about a manner of sending the training dataset, and the method further comprises: determining, by the first network device based on the third information and a resource usage status of the first network device, whether the first network device and/or the training device have/has a capability of supporting training of the AI model.

22. The method according to any one of claims 18 to 21, wherein the determining a to-be-sent first training dataset based on the third information comprises:

determining the to-be-sent first training dataset based on the first information and the third information, wherein the first information indicates related information of the first training dataset that the first network device is requested to send.

23. The method according to claim 22, wherein the related information comprises at least one of the following: information about a size of the first training dataset, input information of the AI model, or configuration information of a reference signal used for training the AI model.

24. The method according to claim 23, wherein the information about the size of the first training dataset is determined based on the size of the training dataset needed for completing training of the AI model.

25. The method according to claim 23, wherein the configuration information of the reference signal comprises at least one of the following: an identifier of the reference signal, a time domain resource of the reference signal, a frequency domain resource of the reference signal, a transmission periodicity of the reference signal, or a type of the transmitted reference signal.

26. The method according to any one of claims 22 to 25, wherein the first information comprises at least one of the following: the identification information of the AI model, information about an application scenario of the AI model, usage information of the AI model, or the information about the computing capability of the training device.

27. The method according to any one of claims 18 to 26, wherein the method further comprises:

receiving second information from the training device, wherein the second information indicates related information of a second training dataset that the first network device is requested to send, the second information is determined based on performance of the AI model, and the performance of the AI model is determined through training based on the first training dataset; and
determining the to-be-sent second training dataset based on the second information.

28. A communication method, wherein the method is performed by a training device or a chip or circuit configured to be disposed in a training device, and the method comprises:

measuring N groups of reference signals, and obtaining N groups of measurement results corresponding to the N groups of reference signals, wherein each group of reference signals in the N groups of reference signals comprises at least one reference signal, each group of reference signals has a same group identifier, and N is an integer greater than 1;
receiving fourth information from a network device, wherein the fourth information indicates M groups of reference signals in the N groups of reference signals; and
determining first input information of an artificial intelligence AI model based on the fourth information and the N groups of measurement results corresponding to the N groups of reference signals, wherein the first input information comprises M groups of measurement results corresponding to the M groups of reference signals; and the AI model is used to obtain first output information based on the first input information, wherein the first output information comprises respective group identifiers of K groups of reference signals in the N groups of reference signals, the respective group identifiers of the K groups of reference signals correspond to K groups of measurement results with best channel quality in the N groups of measurement results, and each group of measurement results comprises one or more measurement results.

29. The method according to claim 28, wherein the first output information further comprises respective group identifiers of remaining (N-K) groups of reference signals in the N groups of measurement results, and the respective group identifiers of the (N-K) groups of reference signals correspond to (N-K) groups of measurement results.

30. The method according to claim 28 or 29, wherein the fourth information comprises N fields, the N fields are in one-to-one correspondence with the N groups of reference signals, and bit values of M fields in the N fields are different from bit values of remaining (N-M) fields; and
that the fourth information indicates M groups of reference signals in the N groups of reference signals comprises: the M fields in the fourth information indicate the M groups of reference signals.

31. The method according to any one of claims 28 to 30, wherein the method further comprises:

receiving fifth information from the network device, wherein the fifth information indicates P groups of reference signals in the N groups of reference signals, the fifth information comprises N fields, the N fields are in one-to-one correspondence with the N groups of reference signals, and bit values of P fields in the N fields are different from bit values of remaining (N-P) fields; and
that the fifth information indicates P groups of reference signals in the N groups of reference signals comprises: the P fields in the fifth information indicate the P groups of reference signals.

32. The method according to any one of claims 28 to 31, wherein the method further comprises:
receiving configuration information from the network device, wherein the configuration information indicates one or more of the following: time domain resources of the N groups of reference signals, frequency domain resources of the N groups of reference signals, transmission periodicities of the N groups of reference signals, or group identifiers of the N groups of reference signals.

33. A communication method, wherein the method is performed by a network device or a chip or circuit configured to be disposed in a network device, and the method comprises:

sending N groups of reference signals to a training device, wherein each group of reference signals in the N groups of reference signals comprises at least one reference signal, each group of reference signals has a same group identifier, and N is an integer greater than 1; and

sending fourth information to the training device, wherein the fourth information indicates M groups of reference signals in the N groups of reference signals, and the M groups of reference signals are used to determine first input information; and

an AI model is used to obtain first output information based on the first input information, wherein the first output information comprises respective group identifiers of K groups of reference signals in the N groups of reference signals, the respective group identifiers of the K groups of reference signals correspond to K groups of measurement results with best channel quality in N groups of measurement results corresponding to the N groups of reference signals, and each group of measurement results comprises one or more measurement results.

34. The method according to claim 33, wherein the first output information further comprises respective group identifiers of remaining (N-K) groups of reference signals in the N groups of measurement results, and the respective group identifiers of the (N-K) groups of reference signals correspond to (N-K) groups of measurement results.

35. The method according to claim 33 or 34, wherein the fourth information comprises N fields, the N fields are in one-to-one correspondence with the N groups of reference signals, and bit values of M fields in the N fields are different from bit values of remaining (N-M) fields; and

that the fourth information indicates M groups of reference signals in the N groups of reference signals comprises: the M fields in the fourth information indicate the M groups of reference signals.

36. The method according to any one of claims 33 to 35, wherein the method further comprises:

sending fifth information to the training device, wherein the fifth information indicates P groups of reference signals in the N groups of reference signals, the fifth information comprises N fields, the N fields are in one-to-one correspondence with the N groups of reference signals, and bit values of P fields in the N fields are different from bit values of remaining (N-P) fields; and

that the fifth information indicates P groups of reference signals in the N groups of reference signals comprises: the P fields in the fifth information indicate the P groups of reference signals.

37. The method according to any one of claims 33 to 36, wherein the method further comprises:
sending configuration information to the training device, wherein the configuration information indicates one or more of the following: time domain resources of the N groups of reference signals, frequency domain resources of the N groups of reference signals, transmission periodicities of the N groups of reference signals, or group identifiers of the N groups of reference signals.

38. A communication method, wherein the method is performed by a training device or a chip or circuit configured to be disposed in a training device, and the method comprises:

receiving a second reference signal set, wherein the second reference signal set comprises N groups of reference signals, each group of reference signals in the N groups of reference signals comprises at least one reference signal, and N is an integer greater than 1; and

receiving second beam indication information, wherein the second beam indication information indicates a beam corresponding to a first reference signal set, the beam corresponding to the first reference signal set is a subset of a plurality of beams corresponding to the second reference signal set, the beam corresponding to the first reference signal set is used to determine first input information of an AI model in the training device, the first input information is based on a measurement result of the beam corresponding to the first reference signal set, the first reference signal set comprises M groups of reference signals, N is an integer greater than M, and M is an integer greater than or equal to 1; and

the AI model is used to obtain first output information based on the first input information, wherein the first output information indicates K beams that are predicted to have best channel quality in the plurality of beams corresponding to the second reference signal set, K is an integer greater than or equal to 1, K is less than N, and a label of the AI model is the K beams with best channel quality in measurement results of the second reference signal set.

39. The method according to claim 38, wherein that the first output information indicates K beams that are predicted to have best channel quality in the plurality of beams corresponding to the second reference signal set comprises at least one of the following:

information about the K beams that are predicted to have the best channel quality in the plurality of beams corresponding to the second reference signal set; or

respective group identifiers of K groups of reference signals, wherein the K groups of reference signals correspond to K measurement results that are predicted to have best channel quality in N measurement results corresponding to the N groups of reference signals, and a predefined or preconfigured correspondence exists between the respective group identifiers of the K groups of reference signals and the K beams; or

a plurality of pieces of beam information corresponding to the N groups of reference signals and N measurement results corresponding to the beam information; or

respective group identifiers of the N groups of reference signals and N measurement results of the N groups of reference signals, wherein a predefined or preconfigured correspondence exists between the N groups of reference signals and N beams.

40. The method according to claim 38 or 39, wherein that the second beam indication information indicates a beam corresponding to a first reference signal set comprises:
the second beam indication information indicates a location of the beam corresponding to the first reference signal set in the plurality of beams corresponding to the second reference signal set.

41. The method according to any one of claims 38 to 40, wherein the second beam indication information comprises N fields, the N fields are in one-to-one correspondence with the plurality of beams corresponding to the second reference signal set, and bit values of M fields in the N fields are different from bit values of remaining (N-M) fields; and that the second beam indication information indicates a beam corresponding to a first reference signal set comprises:
the M fields in the second beam indication information correspond to the first reference signal set.

42. The method according to any one of claims 38 to 41, wherein the method further comprises:
sending first configuration information to the training device, wherein the first configuration information indicates one or more of the following: time domain resources of the N groups of reference signals, frequency domain resources of the N groups of reference signals, transmission periodicities of the N groups of reference signals, the group identifiers of the N groups of reference signals, or the beam information of the N groups of reference signals.

43. The method according to any one of claims 38 to 42, wherein the second beam indication information indicates beams corresponding to the M groups of reference signals.

44. The method according to claim 43, wherein that the second beam indication information indicates beams corresponding to the M groups of reference signals comprises:
the second beam indication information comprises group identifiers or beam information of the M groups of reference signals, the M groups of reference signals are a part of the N groups of reference signals, and the predefined or preconfigured correspondence exists between the N groups of reference signals and the N beams.

45. The method according to claim 44, wherein the method further comprises:

sending third configuration information of the N groups of reference signals to the training device, wherein when the second beam indication information comprises the group identifiers of the M groups of reference signals, the third configuration information of the N groups of reference signals comprises the respective group identifiers of the N groups of reference signals, and indicates one or more of the following: the time domain resources of the N groups of reference signals, the frequency domain resources of the N groups of reference signals, the transmission periodicities of the N groups of reference signals, or beams of the N groups of reference signals; and that the M groups of reference signals are a part of the N groups of reference signals comprises: N group identifiers of the N groups of reference signals comprise M group identifiers of the M groups of reference signals; or

when the second beam indication information comprises the beam information of the M groups of reference signals, the third configuration information of the N groups of reference signals comprises the respective beam information of the N groups of reference signals, and indicates one or more of the following: the group identifiers of the N groups of reference signals, a time domain resource of the N groups of reference signals, the frequency domain resources of the N groups of reference signals, or the transmission periodicities of the N groups of reference signals; and that the M groups of reference signals are a part of the N groups of reference signals comprises: N group identifiers of the N groups of reference signals comprise M group identifiers of the M groups of reference signals.

46. The method according to any one of claims 38 to 45, wherein the method further comprises: measuring the N groups of reference signals to obtain the N measurement results, wherein the N measurement results correspond to the N beams, and the N measurement results comprise the measurement result of the beam corresponding to the first reference signal set.

47. A communication method, wherein the method is performed by a network device or a chip or circuit configured to be disposed in a network device, and the method comprises:

sending a second reference signal set to a training device, wherein the second reference signal set comprises N groups of reference signals, each group of reference signals in the N groups of reference signals comprises at least one reference signal, and N is an integer greater than 1; and

sending second beam indication information to the training device, wherein the second beam indication information indicates a beam corresponding to a first reference signal set, the beam corresponding to the first reference signal set is a subset of a plurality of beams corresponding to the second reference signal set, the beam corresponding to the first reference signal set is used to determine first input information of an AI model in the training device, the first input information is based on a measurement result of the beam corresponding to the first reference signal set, the first reference signal set comprises M groups of reference signals, N is an integer greater than M, and M is an integer greater than or equal to 1; and

the AI model is used to obtain first output information based on the first input information, wherein the first output information indicates K beams that are predicted to have best channel quality in the plurality of beams corresponding to the second reference signal set, K is an integer greater than or equal to 1, K is less than N, and a label of the AI model is the K beams with best channel quality in measurement results of the second reference signal set.

48. The method according to claim 47, wherein that the first output information indicates K beams that are predicted to have best channel quality in the plurality of beams corresponding to the second reference signal set comprises at least one of the following:

information about the K beams that are predicted to have the best channel quality in the plurality of beams corresponding to the second reference signal set; or

respective group identifiers of K groups of reference signals, wherein the K groups of reference signals correspond to K measurement results that are predicted to have best channel quality in N measurement results corresponding to the N groups of reference signals, and a predefined or preconfigured correspondence exists between the respective group identifiers of the K groups of reference signals and the K beams; or

a plurality of pieces of beam information corresponding to the N groups of reference signals and N measurement results corresponding to the beam information; or

respective group identifiers of the N groups of reference signals and N measurement results of the N groups of reference signals, wherein a predefined or preconfigured correspondence exists between the N groups of reference signals and N beams.

49. The method according to claim 47 or 48, wherein that the second beam indication information indicates a beam corresponding to a first reference signal set comprises: the second beam indication information indicates a location of the beam corresponding to the first reference signal set in the plurality of beams corresponding to the second reference signal set.

50. The method according to any one of claims 47 to 49, wherein the second beam indication information comprises N fields, the N fields are in one-to-one correspondence with the plurality of beams corresponding to the second reference signal set, and bit values of M fields in the N fields are different from bit values of remaining (N-M) fields; and that the second beam indication information indicates a beam corresponding to a first reference signal set comprises: the M fields in the second beam indication information correspond to the first reference signal set.

51. The method according to any one of claims 47 to 50, wherein the method further comprises: sending first configuration information to the training device, wherein the first configuration information indicates one or more of the following: time domain resources of the N groups of reference signals, frequency domain resources of the N groups of reference signals, transmission periodicities of the N groups of reference signals, the group identifiers of the N groups of reference signals, or the beam information of the N groups of reference signals.

52. The method according to any one of claims 47 to 51, wherein the second beam indication information indicates beams corresponding to the M groups of reference signals.

53. The method according to claim 52, wherein that the second beam indication information indicates beams corresponding to the M groups of reference signals comprises:
the second beam indication information comprises group identifiers or beam information of the M groups of reference signals, the M groups of reference signals are a part of the N groups of reference signals, and the predefined or preconfigured correspondence exists between the N groups of reference signals and the N beams.

54. The method according to claim 53, wherein the method further comprises:

sending third configuration information of the N groups of reference signals to the training device, wherein when the second beam indication information comprises the group identifiers of the M groups of reference signals, the third configuration information of the N groups of reference signals comprises the respective group identifiers of the N groups of reference signals, and indicates one or more of the following: the time domain resources of the N groups of reference signals, the frequency domain resources of the N groups of reference signals, the transmission periodicities of the N groups of reference signals, or beams of the N groups of reference signals; and that the M groups of reference signals are a part of the N groups of reference signals comprises: N group identifiers of the N groups of reference signals comprise M group identifiers of the M groups of reference signals; or
when the second beam indication information comprises the beam information of the M groups of reference signals, the third configuration information of the N groups of reference signals comprises the respective beam information of the N groups of reference signals, and indicates one or more of the following: the group identifiers of the N groups of reference signals, a time domain resource of the N groups of reference signals, the frequency domain resources of the N groups of reference signals, or the transmission periodicities of the N groups of reference signals; and that the M groups of reference signals are a part of the N groups of reference signals comprises: N group identifiers of the N groups of reference signals comprise M group identifiers of the M groups of reference signals.

55. A communication method, wherein the method is performed by a terminal device or a chip or circuit configured to be disposed in a terminal device, and the method comprises:

receiving a first reference signal set, wherein the first reference signal set comprises M groups of reference signals, each group of reference signals in the M groups of reference signals comprises at least one reference signal, and M is an integer greater than or equal to 1; and
receiving first beam indication information, wherein the first beam indication information indicates a beam corresponding to the first reference signal set, the first reference signal set is used to determine first input information of the AI model, the first input information is based on measurement results of the M groups of reference signals comprised in the first reference signal set, the beam corresponding to the first reference signal set is a subset of a plurality of beams corresponding to a second reference signal set, the second reference signal set comprises N groups of reference signals, and N is an integer greater than or equal to M; and
the AI model is used to obtain first output information based on the first input information, wherein the first output information indicates K beams that are predicted to have best channel quality in the plurality of beams corresponding to the second reference signal set, K is an integer greater than or equal to 1, and K is less than N.

56. The method according to claim 55, wherein that the first output information indicates K beams that are predicted to have best channel quality in the plurality of beams corresponding to the second reference signal set comprises at least one of the following:

information about the K beams that are predicted to have the best channel quality in the plurality of beams corresponding to the second reference signal set; or
respective group identifiers of K groups of reference signals, wherein the K groups of reference signals correspond to K measurement results that are predicted to have best channel quality in N measurement results corresponding to the N groups of reference signals, and a predefined or preconfigured correspondence exists between the respective group identifiers of the K groups of reference signals and the K beams; or

a plurality of pieces of beam information corresponding to the N groups of reference signals and N measurement results corresponding to the beam information; or

respective group identifiers of the N groups of reference signals and N measurement results of the N groups of reference signals, wherein a predefined or preconfigured correspondence exists between the N groups of reference signals and N beams.

57. The method according to claim 55 or 56, wherein that the first beam indication information indicates a beam corresponding to the first reference signal set comprises: the first beam indication information indicates a location of the beam corresponding to the first reference signal set in the plurality of beams corresponding to the second reference signal set.

58. The method according to any one of claims 55 to 57, wherein the first beam indication information comprises N fields, the N fields are in one-to-one correspondence with the plurality of beams corresponding to the second reference signal set, and bit values of M fields in the N fields are different from bit values of remaining (N-M) fields; and that the first beam indication information indicates a beam corresponding to the first reference signal set comprises: the M fields in the first beam indication information correspond to the first reference signal set.

59. The method according to any one of claims 55 to 58, wherein the method further comprises:
receiving first configuration information, wherein the first configuration information indicates one or more of the following: time domain resources of the M groups of reference signals, frequency domain resources of the M groups of reference signals, transmission periodicities of the M groups of reference signals, group identifiers of the M groups of reference signals, or beam information of the M groups of reference signals.

60. The method according to any one of claims 55 to 59, wherein the first beam indication information indicates beams corresponding to the M groups of reference signals.

61. The method according to claim 60, wherein that the first beam indication information indicates beams corresponding to the M groups of reference signals comprises:
the first beam indication information comprises the group identifiers or the beam information of the M groups of reference signals, the M groups of reference signals are a part of the N groups of reference signals, and the predefined or preconfigured correspondence exists between the N groups of reference signals and the N beams.

62. The method according to claim 61, wherein the first beam indication information is comprised in second configuration information of the M groups of the reference signals; and

when the first beam indication information comprises the group identifiers of the M groups of reference signals, the second configuration information further comprises one or more of the time domain resources, the frequency domain resources, the transmission periodicities, or the beam information of the M groups of reference signals; or when the first beam indication information comprises the beam information of the M groups of reference signals, the second configuration information further comprises one or more of the time domain resources, the frequency domain resources, the transmission periodicities, or the group identifiers of the M groups of reference signals.

63. The method according to claim 61 or 62, wherein the method further comprises:

receiving third configuration information of the N groups of reference signals, wherein
when the first beam indication information comprises the group identifiers of the M groups of reference signals, the third configuration information of the N groups of reference signals comprises the respective group identifiers of the N groups of reference signals, and indicates one or more of the following: time domain resources of the N groups of reference signals, frequency domain resources of the N groups of reference signals, transmission periodicities of the N groups of reference signals, or beams of the N groups of reference signals; and that the M groups of reference signals are a part of the N groups of reference signals comprises: N group identifiers of the N groups of reference signals comprise M group identifiers of the M groups of reference signals; or when the first beam indication information comprises the beam information of the M groups of reference signals, the third configuration information of the N groups of reference signals comprises the respective beam information of the N groups of reference signals, and indicates one or more of the following: the group identifiers of the N groups of reference signals, a time domain resource of the N groups of reference signals, frequency domain resources of the N groups of reference signals, or transmission periodicities of the N groups of reference signals; and that the M groups of reference signals are a part of the N groups of reference signals comprises: N group identifiers of the N groups of reference signals comprise M group identifiers of the M groups of reference signals.

64. The method according to any one of claims 55 to 63, wherein the method further comprises:

obtaining the first output information based on the first input information by using the AI model; and
sending the first output information.

65. A communication method, wherein the method is performed by a network device or a chip or circuit configured to be disposed in a network device, and the method comprises:

sending a first reference signal set to a terminal device, wherein the first reference signal set comprises M groups of reference signals, each group of reference signals in the M groups of reference signals comprises at least one reference signal, and M is an integer greater than or equal to 1; and
sending first beam indication information to the terminal device, wherein the first beam indication information indicates a beam corresponding to the first reference signal set, the first reference signal set is used to determine first input information of the AI model, the first input information is based on measurement results of the M groups of reference signals comprised in the first reference signal set, the beam corresponding to the first reference signal set is a subset of a plurality of beams corresponding to a second reference signal set, the second reference signal set comprises N groups of reference signals, and N is an integer greater than or equal to M; and
the AI model is used to obtain first output information based on the first input information, wherein the first output information indicates K beams that are predicted to have best channel quality in the plurality of beams corresponding to the second reference signal set, K is an integer greater than or equal to 1, and K is less than N.

66. The method according to claim 65, wherein that the first output information indicates K beams that are predicted to have best channel quality in the plurality of beams corresponding to the second reference signal set comprises at least one of the following:

information about the K beams that are predicted to have the best channel quality in the plurality of beams corresponding to the second reference signal set; or
respective group identifiers of K groups of reference signals, wherein the K groups of reference signals correspond to K measurement results that are predicted to have best channel quality in N measurement results corresponding to the N groups of reference signals, and a predefined or preconfigured correspondence exists between the respective group identifiers of the K groups of reference signals and the K beams; or
a plurality of pieces of beam information corresponding to the N groups of reference signals and N measurement results corresponding to the beam information; or respective group identifiers of the N groups of reference signals and N measurement results of the N groups of reference signals, wherein a predefined or preconfigured correspondence exists between the N groups of reference signals and N beams.

67. The method according to claim 65 or 66, wherein that the first beam indication information indicates a beam corresponding to the first reference signal set comprises: the first beam indication information indicates a location of the beam corresponding to the first reference signal set in the plurality of beams corresponding to the second reference signal set.

68. The method according to any one of claims 65 to 67, wherein the first beam indication information comprises N fields, the N fields are in one-to-one correspondence with the plurality of beams corresponding to the second reference signal set, and bit values of M fields in the N fields are different from bit values of remaining (N-M) fields; and
that the first beam indication information indicates a beam corresponding to the first reference signal set comprises: the M fields in the first beam indication information correspond to the first reference signal set.

69. The method according to any one of claims 65 to 68, wherein the method further comprises:
sending first configuration information to the terminal device, wherein the first configuration information indicates one or more of the following: time domain resources of the M groups of reference signals, frequency domain resources of the M groups of reference signals, transmission periodicities of the M groups of reference signals, group identifiers of the M groups of reference signals, or beam information of the M groups of reference signals.

70. The method according to any one of claims 65 to 69, wherein the first beam indication information indicates beams corresponding to the M groups of reference signals.

71. The method according to claim 70, wherein that the first beam indication information indicates beams corresponding to the M groups of reference signals comprises:

the first beam indication information comprises the group identifiers or the beam information of the M groups of reference signals, the M groups of reference signals are a part of the N groups of reference signals, and the predefined or preconfigured correspondence exists between the N groups of reference signals and the N beams.

72. The method according to claim 71, wherein

the first beam indication information is comprised in second configuration information of the M groups of the reference signals; and

when the first beam indication information comprises the group identifiers of the M groups of reference signals, the second configuration information further comprises one or more of the time domain resources, the frequency domain resources, the transmission periodicities, or the beam information of the M groups of reference signals; or when the first beam indication information comprises the beam information of the M groups of reference signals, the second configuration information further comprises one or more of the time domain resources, the frequency domain resources, the transmission periodicities, or the group identifiers of the M groups of reference signals.

73. The method according to claim 71 or 72, wherein the method further comprises:

sending third configuration information of the N groups of reference signals to the terminal device, wherein when the first beam indication information comprises the group identifiers of the M groups of reference signals, the third configuration information of the N groups of reference signals comprises the respective group identifiers of the N groups of reference signals, and indicates one or more of the following: time domain resources of the N groups of reference signals, frequency domain resources of the N groups of reference signals, transmission periodicities of the N groups of reference signals, or beams of the N groups of reference signals; and that the M groups of reference signals are a part of the N groups of reference signals comprises: N group identifiers of the N groups of reference signals comprise M group identifiers of the M groups of reference signals; or when the first beam indication information comprises the beam information of the M groups of reference signals, the third configuration information of the N groups of reference signals comprises the respective beam information of the N groups of reference signals, and indicates one or more of the following: the group identifiers of the N groups of reference signals, a time domain resource of the N groups of reference signals, frequency domain resources of the N groups of reference signals, or transmission periodicities of the N groups of reference signals; and that the M groups of reference signals are a part of the N groups of reference signals comprises: N group identifiers of the N groups of reference signals comprise M group identifiers of the M groups of reference signals.

74. The method according to any one of claims 65 to 73, wherein the method further comprises:
receiving the first output information from the terminal device.

75. A communication apparatus, configured to implement the method according to any one of claims 1 to 7, or configured to implement the method according to any one of claims 28 to 32, or configured to implement the method according to any one of claims 38 to 46.

76. A communication apparatus, configured to implement the method according to any one of claims 8 to 17, or configured to implement the method according to any one of claims 18 to 27.

77. A communication apparatus, configured to implement the method according to any one of claims 33 to 37, or configured to implement the method according to any one of claims 47 to 54.

78. A communication apparatus, configured to implement the method according to any one of claims 55 to 64, or configured to implement the method according to any one of claims 65 to 74.

79. A communication apparatus, comprising:
a processor, wherein the processor is coupled to a memory, and the processor is configured to invoke computer program instructions stored in the memory, to perform the method according to any one of claims 1 to 7, or configured to implement the method according to any one of claims 28 to 32, or configured to implement the method according to any one of claims 38 to 46.

80. A communication apparatus, comprising:
a processor, wherein the processor is coupled to a memory, and the processor is configured to invoke computer program instructions stored in the memory, to perform the method according to any one of claims 8 to 17, or configured to implement the method according to any one of claims 18 to 27.

81. A communication apparatus, comprising a processor, wherein the processor is coupled to a memory, and the processor is configured to invoke computer program instructions stored in the memory, to perform the method according to any one of claims 33 to 37, or configured to implement the method according to any one of claims 47 to 54.

82. A communication apparatus, comprising a processor, wherein the processor is coupled to a memory, and the processor is configured to invoke computer program instructions stored in the memory, to perform the method according to any one of claims 55 to 64, or configured to implement the method according to any one of claims 65 to 74.

83. A communication system, comprising a communication apparatus configured to perform the method according to any one of claims 1 to 7 and a communication apparatus configured to implement the method according to any one of claims 8 to 17; or

a communication apparatus configured to perform the method according to any one of claims 1 to 7 and a communication apparatus configured to implement the method according to any one of claims 18 to 27; or
a communication apparatus configured to implement the method according to any one of claims 28 to 32 and a communication apparatus configured to implement the method according to any one of claims 33 to 37; or
a communication apparatus configured to implement the method according to any one of claims 38 to 46 and a communication apparatus configured to implement the method according to any one of claims 47 to 54; or
a communication apparatus configured to implement the method according to any one of claims 55 to 64 and a communication apparatus configured to implement the method according to any one of claims 65 to 74.

84. A computer-readable storage medium, wherein the computer-readable storage medium stores instructions; and when the instructions are run on a computer, the computer is enabled to perform the method according to any one of claims 1 to 74.

85. A computer program product, comprising instructions, wherein when the instructions are run on a computer, the computer is enabled to perform the method according to any one of claims 1 to 74.

FIG. 1

FIG. 2

FIG. 3

FIG. 4

Method 500

FIG. 5

Method 600

FIG. 6

Method 700

First network device

Training device

For step 701 and step 702, refer to step 501 and step 502 in the method 500

Step 703: The training device sends first information to the first network device, where the first information is used to request the first network device to send a training dataset

Step 704: The first network device determines a size of a first training dataset sent to the training device

Step 705: The first network device sends N groups of reference signals to the training device

Step 706: The training device measures the N groups of reference signals, and obtains N groups of measurement results corresponding to the N groups of reference signals

Step 707: The first network device sends fourth information to the training device, where the fourth information indicates M groups of reference signals in the N groups of reference signals

Step 708: The training device determines first input information of an AI model based on the fourth information and the N groups of measurement results corresponding to the N groups of reference signals

Step 709: The training device obtains first output information based on the first input information

Step 710: The training device sends model training completion indication information to the first network device

FIG. 7

Method 800

Network
device

Training device

Step 801: The network device sends a second reference
signal set to the training device

Step 802: The network device sends second beam indication
information to the training device, where the second beam
information indicates a beam corresponding to a first
reference signal set

Step 803: The training device determines
first input information of an AI model

Step 804: The training device performs
model training based on the determined
first input information and the AI model,
to obtain first output information

FIG. 8

Method 900

```
┌──────────┐                                    ┌──────────┐
│ Network  │                                    │ Terminal │
│ device   │                                    │ device   │
└──────────┘                                    └──────────┘
```

Step 901: The network device sends a first reference signal
set to the terminal device

Step 902: The network device sends first beam indication
information to the terminal device, where the first beam
information indicates a beam corresponding to the first
reference signal set

Step 903: The terminal device determines
an AI model based on a received sparse
beam pattern

Step 904: The terminal device determines
first input information of the AI model

Step 905: The terminal device performs
model inference based on the determined
first input information and the AI model,
to obtain first output information

Step 906: The terminal device sends the first output
information to the network device

FIG. 9

Communication apparatus 100

Processing unit 120

Transceiver unit 110

FIG. 10

Communication apparatus 200

Processor 210

Interface circuit 220

Memory 230

FIG. 11

## INTERNATIONAL SEARCH REPORT

| International application No. |
|---|
| **PCT/CN2023/119695** |

### A. CLASSIFICATION OF SUBJECT MATTER

G06F18/214(2023.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI; IEEE; 百度, BAIDU: 训练, 集, 人工智能, 模型, 网络, 波束, 信号, 请求, train, set, AI, model, network, beam, signal, request

### C. DOCUMENTS CONSIDERED TO BE RELEVANT

| Category* | Citation of document, with indication, where appropriate, of the relevant passages | Relevant to claim No. |
|---|---|---|
| X | WO 2022061940 A1 (HUAWEI TECHNOLOGIES CO., LTD.) 31 March 2022 (2022-03-31) description, pages 7-32 | 1-27, 75-76, 79-80, 83-85 |
| X | WO 2022174461 A1 (BEIJING XIAOMI MOBILE SOFTWARE CO., LTD.) 25 August 2022 (2022-08-25) description, pages 8-25 | 28-75, 77-79, 81-85 |
| X | CN 110430068 A (HUAWEI TECHNOLOGIES CO., LTD.) 08 November 2019 (2019-11-08) description, paragraphs 39-181 | 1-27, 75-76, 79-80, 83-85 |
| X | HUAWEI et al. "Discussion on AI/ML for beam management" 3gpp网, [在线], [检索日 2023-12-08] 检索于因特网:https://www.3gpp.org/ftp/tsg_ran/WG1_RL1/TSGR1_109-e/Docs/R1-2203143.zip (Non-official translation: 3gpp Network, [online], [search date 08 December 2023] searched at Internet: https://www.3gpp.org/ftp/tsg_ran/WG1_RL1/TSGR1_109-e/Docs/R1-2203143.zip), 20 May 2022 (2022-05-20), pages 1-7 | 28-75, 77-79, 81-85 |
| A | CN 112073106 A (TSINGHUA UNIVERSITY et al.) 11 December 2020 (2020-12-11) entire document | 1-85 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 December 2023** | **13 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/119695** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113994598 A (NOKIA TECHNOLOGIES OY) 28 January 2022 (2022-01-28)<br>        entire document | 1-85 |
| A | CN 111954228 A (BEIJING SAMSUNG COMMUNICATION TECHNOLOGY<br>RESEARCH CO., LTD. et al.) 17 November 2020 (2020-11-17)<br>        entire document | 1-85 |
| A | US 2021336682 A1 (QUALCOMM INC.) 28 October 2021 (2021-10-28)<br>        entire document | 1-85 |

Form PCT/ISA/210 (second sheet) (July 2022)

**INTERNATIONAL SEARCH REPORT**
Information on patent family members

International application No.

**PCT/CN2023/119695**

| Patent document cited in search report | | | Publication date (day/month/year) | Patent family member(s) | | | Publication date (day/month/year) |
|---|---|---|---|---|---|---|---|
| WO | 2022061940 | A1 | 31 March 2022 | None | | | |
| WO | 2022174461 | A1 | 25 August 2022 | CN | 115244965 | A | 25 October 2022 |
| CN | 110430068 | A | 08 November 2019 | EP | 3780496 | A1 | 17 February 2021 |
| | | | | KR | 20210005120 | A | 13 January 2021 |
| | | | | KR | 102470712 | B1 | 25 November 2022 |
| | | | | WO | 2019206100 | A1 | 31 October 2019 |
| | | | | US | 2021042578 | A1 | 11 February 2021 |
| | | | | IN | 202037047267 | A | 25 December 2020 |
| | | | | EP | 3780496 | A4 | 19 May 2021 |
| | | | | CN | 113159145 | A | 23 July 2021 |
| | | | | CN | 110430068 | B | 09 April 2021 |
| CN | 112073106 | A | 11 December 2020 | CN | 112073106 | B | 22 April 2022 |
| CN | 113994598 | A | 28 January 2022 | WO | 2020214168 | A1 | 22 January 2020 |
| | | | | IN | 202117047502 | A | 11 February 2020 |
| | | | | EP | 3956992 | A1 | 23 February 2022 |
| | | | | US | 2022190883 | A1 | 16 June 2022 |
| CN | 111954228 | A | 17 November 2020 | US | 2020366340 | A1 | 19 November 2020 |
| | | | | WO | 2020231193 | A1 | 19 November 2020 |
| | | | | EP | 3925086 | A1 | 22 December 2021 |
| | | | | EP | 3925086 | B1 | 02 August 2023 |
| | | | | EP | 3925086 | A4 | 20 April 2022 |
| | | | | KR | 20200132735 | A | 25 November 2020 |
| US | 2021336682 | A1 | 28 October 2021 | US | 11595102 | B2 | 28 February 2023 |

Form PCT/ISA/210 (patent family annex) (July 2022)

**REFERENCES CITED IN THE DESCRIPTION**

**Patent documents cited in the description**

- CN 202211214685

- CN 202211247927